# EUROPEAN PATENT SPECIFICATION

(11) **EP 3 134 739 B1**
(45) Date of publication and mention of the grant of the patent: **10.07.2019**
(21) Application number: 15783086.0
(22) Date of filing: 25.04.2015
(51) Int. Cl.: G01N 35/08, G01N 33/48, G01N 27/26, B01L 3/00

(54) **PROVIDING DEP MANIPULATION DEVICES AND CONTROLLABLE ELECTROWETTING DEVICES IN THE SAME MICROFLUIDIC APPARATUS**
BEREITSTELLUNG VON DEP-MANIPULATIONSVORRICHTUNGEN UND STEUERBAREN ELEKTROWETTING-VORRICHTUNGEN IN DERSELBEN MIKROFLUIDISCHEN VORRICHTUNG
FOURNITURE DE DISPOSITIFS DE MANIPULATION DE DIÉLECTROPHORÈSE ET DE DISPOSITIFS D'ÉLECTROMOUILLAGE COMMANDABLES DANS LE MÊME APPAREIL MICROFLUIDIQUE

(30) Priority: 25.04.2014 US 201414262200; 25.04.2014 US 201414262140
(43) Date of publication of application: 01.03.2017
(73) Proprietor: Berkeley Lights, Inc., Emeryville, CA 94608 (US)
(72) Inventor: KHANDROS, Igor Y., Emeryville, California 94608 (US); MALLEO, Daniele, Emeryville, California 94608 (US); NEVILL, J. Tanner, Emeryville, California 94608 (US); SHORT, Steven W., Emeryville, California 94608 (US); WU, Ming C., Emeryville, California 94608 (US)
(74) Representative: D Young & Co LLP
(86) International application number: PCT/US2015/027680
(87) International publication number: WO 2015/164847

(56) References cited:
- EP-A1- 2 570 188
- WO-A1-2014/036915
- WO-A2-2005/100541
- US-A1- 2003 224 528
- US-A1- 2007 023 292
- US-A1- 2010 101 960
- US-A1- 2010 181 195
- US-A1- 2011 086 377
- SHIH-KANG FAN ET AL: "Cross-scale electric manipulations of cells and droplets by frequency-modulated dielectrophoresis and electrowetting", LAB ON A CHIP, ROYAL SOCIETY OF CHEMISTRY; THE INSTITUTION OF ELECTRICAL ENGINEERS, STEVENAGE, GB, vol. 8, no. 8, 1 August 2008 (2008-08-01), pages 1325-1331, XP002690699, ISSN: 1473-0197, DOI: 10.1039/B803204A [retrieved on 2008-05-28]

## Description

### CROSS REFERENCE TO RELATED APPLICATION(S)

This application claims priority to US patent application serial no. 14/262,200, filed April 25, 2014, and US patent application serial no. 14/262,140, filed April 25, 2014, each of which is incorporated herein by reference in its entirety.

### BACKGROUND

Micro-objects, such as biological cells, can be processed in a microfluidic apparatus. For example, micro-objects suspended in a liquid in a microfluidic apparatus can be sorted, selected, and moved in the apparatus. The liquid can also be manipulated in the device. Embodiments of the present invention are directed to improvements in manipulating micro-objects and liquid in the same microfluidic apparatus.

SHIH-KANG FAN ET AL: "Cross-scale electric manipulations of cells and droplets by frequency-modulated dielectrophoresis and electrowetting", LAB ON A CHIP, ROYAL SOCIETY OF CHEMISTRY; THE INSTITUTION OF ELECTRICAL ENGINEERS, STEVENAGE, GB, vol. 8, no. 8, 1 August 2008 pages 1325-1331, describes how dielectrophoresis and electrowetting-on-dielectric are demonstrated by dielectric-coated electrodes on a single chip to manipulate objects on different scales.

WO2014/036915 relates to dielectrophoresis based apparatuses and methods for the manipulation of particles in liquids.

EP 2 570 188 relates to an active matrix device for fluid control by electro-wetting and dielectrophoresis and method of driving.

WO 2005/100541 relates to optoelectric tweezers for microparticle and cell manipulation.

### SUMMARY

Particular aspects of the invention are set out in the appended claims.

In some teachings, a structure can comprise a dielectrophoresis (DEP) configuration comprising an outer surface and an electrowetting (EW) configuration comprising an electrowetting surface. The DEP configuration can be disposed adjacent to the EW configuration such that the outer surface of the DEP configuration is adjacent to the electrowetting surface.

Some teachings of the disclosure can be directed to a process of operating a microfluidic apparatus comprising a chamber, dielectrophoresis (DEP) devices, and
electrowetting (EW) devices. The process can include moving a micro-object from an outer surface of a first of the DEP devices to an outer surface of a second of the DEP devices. This can be accomplished, e.g., by activating the second DEP device and thereby creating a net DEP force on the micro-object in a direction of the second DEP device. The process can further include moving a droplet of a liquid medium from a first location to a second location in the chamber by activating a second of the EW devices and thereby changing a wetting property of an electrowetting surface of the second EW device. In the first location, the droplet can be disposed in part on an electrowetting surface of a first of the EW devices but not on the electrowetting surface of the second EW device. In the second location, the droplet can be disposed in part on the electrowetting surface of the second EW device but not on the electrowetting surface of the first EW device.

Some teachings of the disclosure can be directed to a process that includes disposing a droplet of a first liquid medium on outer surfaces of a first set of DEP devices and electrowetting surfaces of a first set of EW devices. The process can also include separating a first part of the droplet from a second part of the droplet by activating electrowetting surfaces of a second set of EW devices and thereby changing a wetting property of the electrowetting surfaces of the second set.

### BRIEF DESCRIPTION OF THE DRAWINGS

Figure 1 illustrates a perspective view of an example of a microfluidic apparatus with a structure comprising dielectrophoresis (DEP) configurations and electrowetting (EW) configurations according to some embodiments of the invention.
Figure 2A is a partial, cross-sectional, side view of an example of a DEP device comprising one of the DEP configurations of Figure 1 according to some embodiments of the invention.
Figure 2B shows an embodiment of a switchable element of the DEP device of Figure 2A comprising a photoconductive material in which low impedance electrical paths can be created with a beam of light according to some embodiments of the invention.
Figure 3 is an example of an embodiment of a switchable element of the DEP device of Figure 2A comprising switches for temporarily creating low impedance electrical paths between a biasing electrode and an outer surface of the switchable element according to some embodiments of the invention.
Figure 4 shows an example in which the switches of Figure 3 are implemented as BJT transistors according to some embodiments of the invention.
Figure 5A is a partial, cross-sectional, side view of an example of an EW device comprising one of the EW configurations of Figure 1 according to some embodiments of the invention.
Figure 5B shows an embodiment of a switchable element of the EW device of Figure 5A comprising a photoconductive material in which a low impedance electrical path can be created with a beam of light according to some embodiments of the invention.
Figure 6 is an example of an embodiment of the switchable element of the EW device of Figure 5A comprising switches for temporarily creating low impedance electrical paths between a biasing electrode and an outer surface of the switchable element according to some embodiments of the invention.
Figure 7 illustrates an example in which a structure of the microfluidic apparatus of Figure 1 comprises DEP configurations and EW configurations integrated into a single, monolithic switchable element according to some embodiments of the invention.
Figure 8 shows an example in which the structure of the microfluidic apparatus of Figure 1 comprises structurally distinct DEP configurations and structurally distinct EW configurations according to some embodiments of the invention.
Figure 9 is an example in which a structure of the microfluidic apparatus of Figure 1 comprises a support structure, where DEP configurations are integrated into sections of the support structure and stand alone distinct EW configurations are disposed in cavities in the support structure according to some embodiments of the invention.
Figure 10 shows an example in which a structure of the microfluidic apparatus of Figure 1 comprises DEP configurations in which switches are embedded into a switchable element and EW configurations that comprise photoconductive material embedded in isolation barriers that separate the DEP configurations according to some embodiments of the invention.
Figure 11 illustrates an embodiment of the microfluidic apparatus of Figure 1 comprising DEP devices and EW devices disposed in alternating patterns according to some embodiments of the invention.
Figures 12A-12C show partial, cross-sectional, side views of the enclosure of Figure 11 and illustrate an example of operation of the microfluidic apparatus of Figure 11 according to some embodiments of the invention.
Figure 13 is an example of a process for operating the apparatus of Figure 11 in accordance with the operations illustrated in Figures 12A-12C according to some embodiments of the invention.
Figures 14A-14C show top views of the enclosure of Figure 11 with the cover removed and illustrate another example of operation of the microfluidic apparatus of Figure 11 according to some embodiments of the invention.
Figure 15 is an example of a process for operating the apparatus of Figure 11 in accordance with the operations illustrated in Figures 14A-14C according to some embodiments of the invention.

### DETAILED DESCRIPTION OF EXEMPLARY EMBODIMENTS

This specification describes exemplary embodiments and applications of the invention. The invention, however, is not limited to these exemplary embodiments and applications or to the manner in which the exemplary embodiments and applications operate or are described herein. Moreover, the figures may show simplified or partial views, and the dimensions of elements in the figures may be exaggerated or otherwise not in proportion. In addition, as the terms "on," "attached to," or "coupled to" are used herein, one element (e.g., a material, a layer, a substrate, etc.) can be "on," "attached to," or "coupled to" another element regardless of whether the one element is directly on, attached to, or coupled to the other element or there are one or more intervening elements between the one element and the other element. Also, directions (e.g., above, below, top, bottom, side, up, down, under, over, upper, lower, horizontal, vertical, "x," "y," "z," etc.), if provided, are relative and provided solely by way of example and for ease of illustration and discussion and not by way of limitation. In addition, where reference is made to a list of elements (e.g., elements a, b, c), such reference is intended to include any one of the listed elements by itself, any combination of less than all of the listed elements, and/or a combination of all of the listed elements. The same reference numbers are used throughout the drawings and specification to refer to the same element.

As used herein, "substantially" means sufficient to work for the intended purpose. The term "substantially" thus allows for minor, insignificant variations from an absolute or perfect state, dimension, measurement, result, or the like such as would be expected by a person of ordinary skill in the field but that do not appreciably affect overall performance. When used with respect to numerical values or parameters or characteristics that can be expressed as numerical values, "substantially" means within ten percent. The term "ones" means more than one.

As used herein, the term "micro-object" can encompass one or more of the following: inanimate micro-objects such as microparticles, microbeads (e.g., polystyrene beads, Luminex™ beads, or the like), magnetic or paramagnetic beads (e.g. solid phase reversible immobilization (SPRI) beads), microrods, microwires, quantum dots, and the like; biological micro-objects such as cells (e.g., embryos, oocytes, sperms, cells dissociated from a tissue, blood cells, hybridomas, cultured cells, cells from a cell line, cancer cells, infected cells, transfected and/or transformed cells, reporter cells, and the like), liposomes (e.g., synthetic or derived from membrane preparations), lipid nanorafts, and the like; or a combination of inanimate micro-objects and biological micro-objects (e.g., microbeads attached to cells, liposome-coated micro-beads, liposome-coated magnetic beads, or the like). Lipid nanorafts have been described, e.g., in Ritchie et al. (2009) "Reconstitution of Membrane Proteins in Phospholipid Bilayer Nanodiscs," Methods Enzymol., 464:211-231.

As used herein, the term "cell" refers to a biological cell, which can be a plant cell, an animal cell (e.g., a mammalian cell), a bacterial cell, a fungal cell, or the like. A mammalian cell can be, for example, from a human, a mouse, a rat, a horse, a goat, a sheep, a cow, a primate, or the like, and can include any of the following cell types: oocytes, sperm, embryos, blood cells, immunological cells, macrophages, NK cells, T cells, B cells, hybridomas, cancer cells, stem cells, normal cells, infected cells (e.g., infected with a virus or other parasite), cells dissociated from a tissue, cultured cells, cells from a cell line, transfected and/or transformed cells, reporter cells, and the like.

The phrase "relatively high electrical conductivity" is used herein synonymously with the phrase "relatively low electrical impedance," and the foregoing phrases are interchangeable. Similarly, the phrase "relatively low electrical conductivity" is used synonymously with the phrase "relatively high electrical impedance," and the foregoing phrases are interchangeable.

A "fluidic circuit" means one or more fluidic structures (e.g., chambers, channels, pens, reservoirs, or the like), which can be interconnected. A "fluidic circuit frame" means one or more walls that define all or part of a fluidic circuit. A "droplet" of liquid medium includes a single droplet or a plurality of droplets that together form a single volume of the liquid medium.

Some embodiments of the invention include a structure comprising one or more structural boundaries (e.g., a floor, ceiling, and/or side) of a chamber or other fluidic structure in a microfluidic apparatus. The structure can comprise one or more dielectrophoresis (DEP) configurations each having an outer surface and one or more electrowetting (EW) configurations each having an electrowetting surface. The boundary can comprise the outer surfaces of the DEP configurations and the electrowetting surfaces of the EW configurations. The DEP configurations can facilitate generating net DEP forces with respect to the outer surfaces of the DEP configurations to move micro-objects (e.g., in a direction generally parallel to the outer surfaces), and the EW configurations can facilitate changing a wetting property of the electrowetting surfaces to move droplets of liquid medium. Such a structure can be part of a microfluidic apparatus, and can thus provide in one microfluidic apparatus the ability both to manipulate micro-objects relative to the outer surfaces of the DEP configurations and to manipulate droplets of medium on the electrowetting surfaces of the EW configurations.

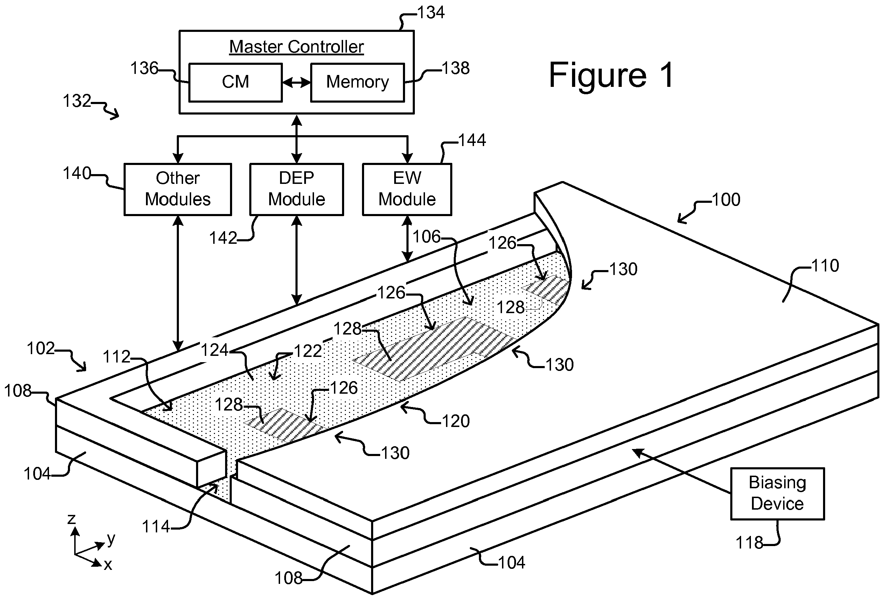

Figure 1 illustrates an example of a microfluidic apparatus 100 that can include a structure 104 that comprises both DEP configurations 122 and EW configurations 126. Also shown are examples of control equipment 132 for controlling operation of the apparatus 100. Although the apparatus 100 can be physically structured in many different ways, in the example shown in Figure 1, the apparatus 100 is depicted as including an enclosure 102 that comprises a structure 104 (e.g., a base), a fluidic circuit frame 108, and a cover 110, which define a fluidic chamber 112 in which one or more liquid media can be disposed.

As noted, the structure 104 can comprise one or more DEP configured sections 122 (hereinafter "DEP configurations") and one or more EW configured sections 126 (hereinafter "EW configurations"). Each DEP configuration 122 can comprise an outer surface 124 and can be configured to temporarily create a net DEP force on a micro-object (not shown in Figure 1) in a liquid medium (not shown in Figure 1) disposed on the outer surface 124. In some embodiments, the outer surface 124 can be hydrophilic. Each EW configuration 126 can comprise an electrowetting surface 128 and can be configured to temporarily change a wetting property of the electrowetting surface 128 or a region of the electrowetting surface 128. For example, the electrowetting surface 128 can be hydrophobic but the EW configuration 126 can be configured to creating a Coulombic force across the electrowetting surface 128 that at least partially counteracts the hydrophobicity of the electrowetting surface 128, as observed by a droplet of aqueous medium resting on the electrowetting surface 128.

Although Figure 1 illustrates the structure 104 as comprising one relatively large DEP configuration 122 with multiple EW configurations 126 disposed within the DEP configuration 122, the foregoing is but an example. As another example, the structure 104 can comprise one relatively large EW configuration 126 (e.g., in place of the DEP configuration 122 in Figure 1) and multiple DEP configurations 122 (e.g., in place of the EW configurations 126 in Figure 1). As yet another example, the structure 104 can comprise multiple DEP configurations 122 and multiple EW configurations 126.

Regardless, the structure 104 can comprise one or more structural boundaries 106 (e.g., a floor, ceiling, and/or side) of one or more fluidic portions of a fluidic circuit defined by the fluidic circuit frame 108. In the example shown in Figure 1, the structural boundary 106 can be a floor of the chamber 112. The structural boundary 106 can comprise the outer surfaces 124 of the DEP configurations 122 and the electrowetting surfaces 128 of the EW configurations 126. The structural boundary 106 of the structure 104 can thus be a composite surface of one or more outer surfaces 124 of one or more DEP configurations 122 and one or more electrowetting surfaces 128 of one or more EW configurations 126.

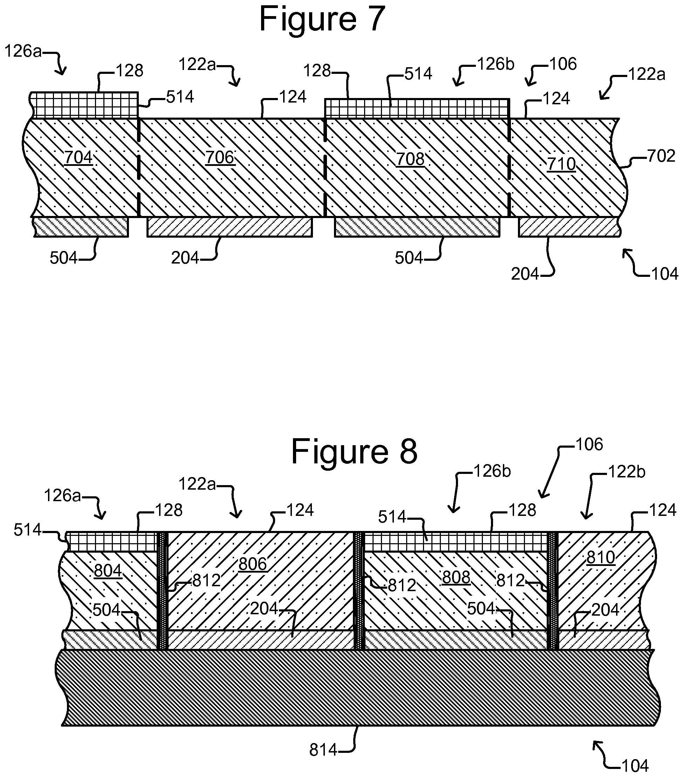

The outer surfaces 124 and the electrowetting surfaces 128 can be substantially parallel. In some embodiments, the outer surfaces 124 and the electrowetting surfaces 128 can also be in substantially the same plane (e.g., as illustrated in Figures 1 and 8), and the structural boundary 106 of the structure 104 can thus be substantially planar. In other embodiments, the outer surfaces 124 and the electrowetting surfaces 128 are not in the same plane but can nevertheless be substantially parallel (e.g., as in the example shown in Figure 7).

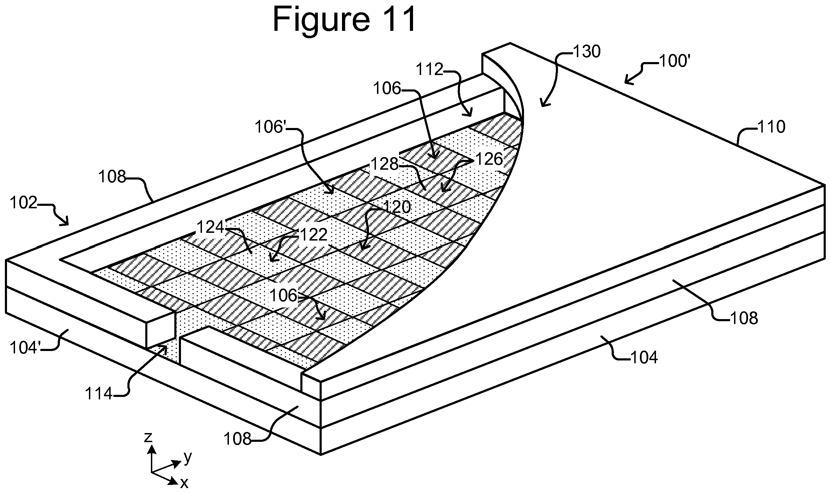

Each DEP configuration 122 (and thus each outer surface 124) and each EW configuration 126 (and thus each electrowetting surface 128) can have any desired shape. Moreover, the DEP configurations 122 (and thus the outer surfaces 124) and the EW configurations 126 (and thus the electrowetting surfaces 128) can be disposed in any desired pattern. Figure 11 (which is discussed below) illustrates an example in which the structure 104 comprises multiple DEP configurations 122 and multiple EW configurations 126 disposed in alternating patterns (e.g., a checkerboard pattern).

As shown in Figure 1, the fluidic circuit frame 108 can be disposed on the structure 104 (e.g., on the boundary 106 of the structure 104), and the cover 110 can be disposed over the fluidic circuit frame 108. With the boundary 106 of the structure 104 as the bottom and the cover as the top 110, the fluidic circuit frame 108 can define a fluidic circuit comprising, for example, interconnected fluidic chambers, channels, pens, reservoirs, and the like. In the example illustrated in Figure 1, the fluidic circuit frame 108 defines a chamber 112, and the boundary 106 of the structure 104 can be, for example, a lower boundary of the chamber 112. Although the structure 104 is shown in Figure 1 as comprising the bottom of the apparatus 100 and the cover 110 is illustrated as the top, the structure 104 can be the top and the cover 110 can be the bottom of the apparatus 100. As also shown, the chamber 112 can include one or more inlets 114 and one or more similar outlets (not shown).

The structure 104 can comprise, for example, a substrate or a plurality of interconnected substrates. For example, the structure 104 can comprise a semiconductor substrate, a printed circuit board substrate, or the like. The fluidic circuit frame 108 can comprise a material, which can be flexible or gas permeable. Alternatively, the material need not be flexible and/or gas permeable. Suitable examples of materials that the circuit frame 108 can comprise include rubber, plastic, an elastomer, silicone, photo-patternable silicon (PPS), polydimethylsiloxane ("PDMS"), or the like). The cover 110 can be an integral part of the fluidic circuit frame 108, or the cover 110 can be a structurally distinct element (as illustrated in Figure 1). The cover 110 can comprise the same or different materials than the fluidic circuit frame 108. Thus, the cover 110 can be made from or comprise a flexible material, as discussed above. Alternatively, the cover 110 can be made from or comprise a rigid material (e.g., glass, including ITO-coated glass). Regardless, the cover 110 and/or the structure 104 can be transparent to light.

Figure 1 also illustrates examples of control equipment 132 that can be utilized with the microfluidic apparatus 100. Examples of such control equipment 132 include a master controller 134, a DEP module 142 for controlling the DEP devices 120 of which the DEP configurations 122 of the structure 104 are a part, and an EW module 144 for controlling EW devices 130 of which the EW configurations 126 of the structure 104 are a part. The control equipment 132 can also include other modules 140 for controlling, monitoring, or performing other functions including, but not limited to controlling the flow of fluid into and out of the microfluidic apparatus 100.

The master controller 134 can comprise a control module 136 and a digital memory 138. The control module 136 can comprise, for example, a digital processor configured to operate in accordance with machine executable instructions (e.g., software, firmware, microcode, or the like) stored in the memory 138. Alternatively or in addition, the control module 136 can comprise hardwired digital circuitry and/or analog circuitry. The DEP module 142, the EW module 144, and/or the other modules 140 can be similarly configured. Thus, functions, processes, acts, actions, or steps of a process discussed herein as being performed with respect to the apparatus 100 can be performed by one or more of the master controller 134, DEP module 142, EW module 144, or other modules 140 configured as discussed above.

As also shown in Figure 1, an electrical biasing device 118 can be connected to the apparatus 100. The electrical biasing device 118 can, for example, comprise one or more voltage or current sources.

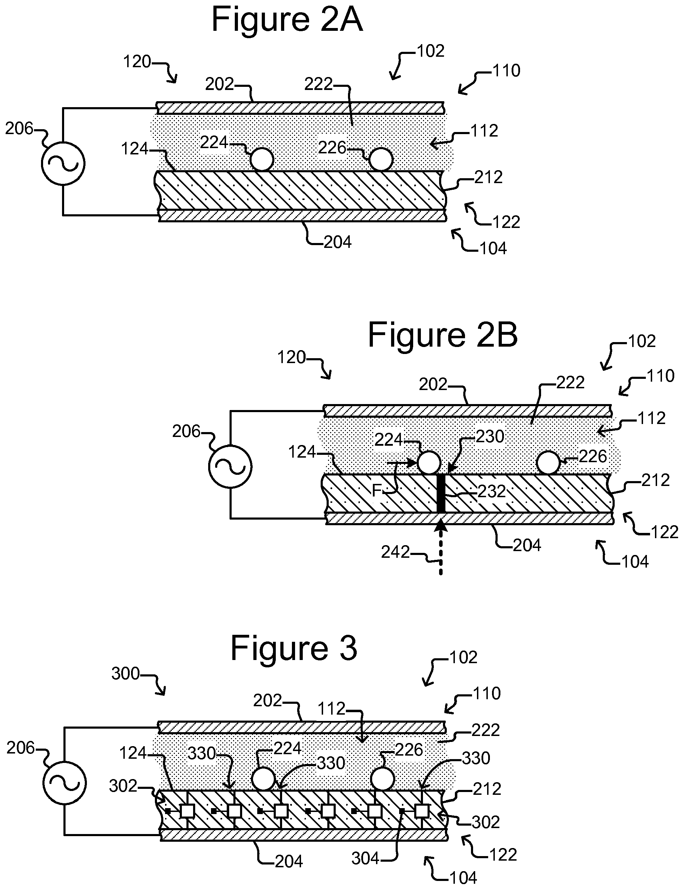

As can be seen in Figure 1, each DEP configuration 122 of the structure 104 can be part of a different DEP device 120 built into the enclosure 102 for temporarily generating net DEP forces on micro-objects (not shown in Figure 1) in liquid medium (not shown in Figure 1) on the outer surface 124 of the DEP configuration 122. Depending on such characteristics as the frequency of a biasing device (e.g., 206 in Figure 2) the dielectric properties of the liquid medium (e.g., 222 in Figure 2), and/or the micro-objects (e.g., 224, 226), the DEP force can attract or repeal the nearby micro-objects. Similarly, each EW configuration 126 of the structure 104 can be part of a different EW device 130 built into the enclosure 102 for temporarily changing a wetting property of the electrowetting surface 128 or a region of the electrowetting surface 128 of the EW configuration 126.

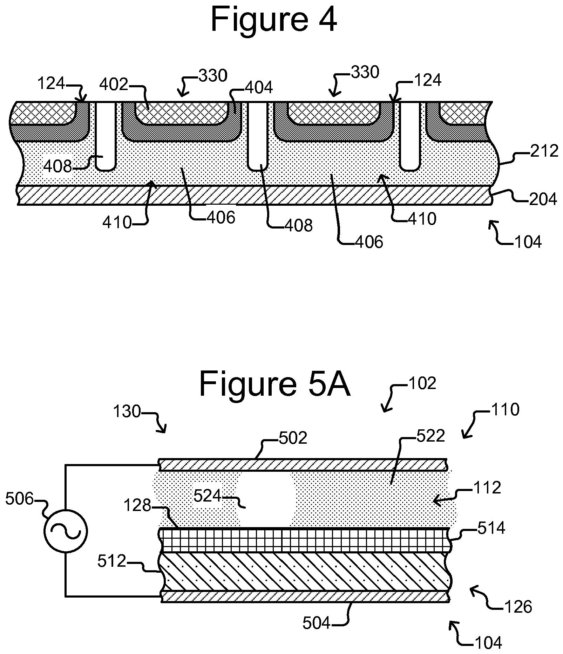

Figures 2A and 2B (which show partial, cross-sectional, side views of the enclosure 102 of Figure 1) illustrate an example of a DEP device 120. The DEP device 120 in Figure 1 and each DEP device 120 in any figure (e.g., Figure 11) can be configured like the DEP device 120 shown in Figures 2A and 2B or any variation thereof (e.g., as illustrated in Figure 3 or 4).

As shown, a DEP device 120 can comprise a biasing electrode 202, a switchable element 212, and another biasing electrode 204 (which can be an example of a first electrode or a second electrode). The biasing electrode 202 can be part of the cover 102, and the switchable element 212 and the other biasing electrode 204 can be part of the structure 104. Alternatively, the biasing electrode 202 can also be part of the structure 104. The chamber 112 can be between the biasing electrode 202 and the switchable element 212, which can be located between the chamber 112 and the other biasing electrode 204. The chamber 112 is illustrated in Figure 2A containing a first liquid medium 222 in which micro-objects 224, 226 (two are shown but there can be more) are disposed. As shown, the outer surface 124 can be an outer surface of the switchable element 212. Alternatively, a layer of material (not shown) can be disposed on the surface of the switchable element 212, and the outer surface 124 of that layer of material can comprise the outer surface 124. As noted, the outer surface 124 can be hydrophilic. Suitable materials that the outer surface 124 can comprise include silicon (e.g., amorphous silicon or crystalline silicon, which may include dopants), silicon oxide, combinations thereof, and the like. Regardless of whether the outer surface 124 is an outer surface of the switching element itself 212 or the outer surface of a layer of material (e.g., a coating) (not shown) disposed on the switching element 212, the switching element 212 can be said to be disposed between the outer surface 124 and the electrode 204.

A first power source 206 (which can be part of the biasing device 118 of Figure 1) can be connected to the electrodes 202, 204. The first power source 206 can be, for example, an alternating current (AC) voltage or current source. The first power source 206 can create a generally uniform electric field between the electrodes 202, 204, with a weak field in the chamber 112 when the switching element 212 is in an inactive mode, which can result in negligible DEP forces on each micro-object 224, 226 in the medium 222 on the outer surface 124 of the DEP configuration 122.

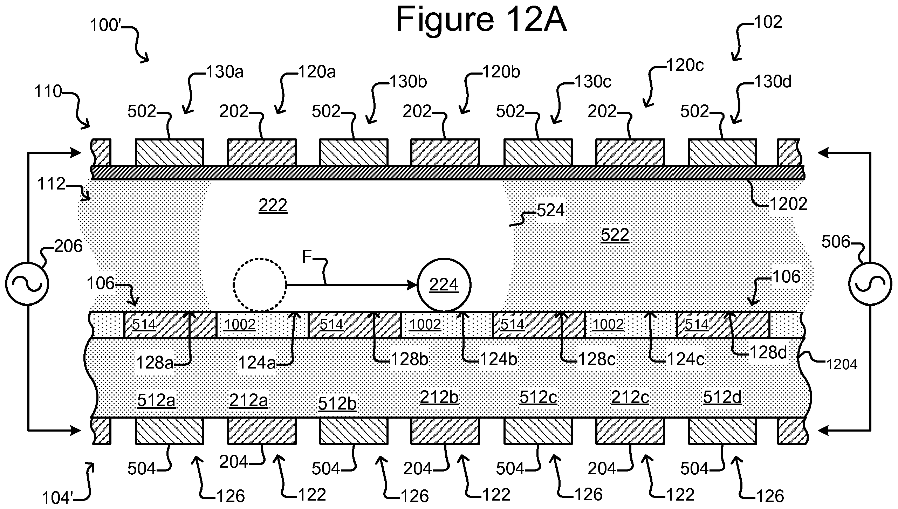

When the switchable element 212 is in an inactive (e.g., open) mode, the electrical impedance of the switchable element 212 can be greater than the electrical impedance of the medium 222 in the chamber 112, such that the voltage drop due to the first power source 206 from the biasing electrode 202 to the other biasing electrode 204 is greater across the switchable element 212 than the voltage drop across the medium 222. As shown in Figure 2B, the switchable element 212 can be configured, however, in an active (e.g., closed) mode, during which a low impedance path 232 (e.g., an electrically conductive path) is temporarily created from a region 230 at or adjacent to the outer surface 124 of the switchable element 212 to the other biasing electrode 204. The electrical impedance of the low impedance path 232 can be less than the electrical impedance of the medium 222. In other words, the voltage drop due to the first power source 206 across the medium 222 from the biasing electrode 202 to the region 230 can be greater than the voltage drop from the region 230 through the low impedance path 232 to the other biasing electrode 204, while the voltage drop across the switchable element 212 (i.e., away from region 230) otherwise generally remains greater than the voltage drop across the medium 222. This can alter the electric field in the medium 222 in the vicinity of the region 230, which can create a net DEP force F on a nearby micro-object 224. The force F, which as noted above can be configured to alternatively attract or repel the nearby micro-object 224, can be sufficient to move the micro-object 224 on the outer surface 124. By sequentially activating and deactivating multiple regions 230 on the surface 124, the micro-object 224 can be moved along the surface 124. As will be discussed in more detail with respect to Figure 12A, the micro-object 224 can also be moved from the outer surface 124 of one DEP configuration 122 to the outer surface 124 of another DEP configuration 122.

In the example of the switchable element 212 shown in Figures 2A and 2B, the switchable element 212 can comprise a photoconductive material (e.g., amorphous silicon) that has a relatively high electrical impedance except when directly illuminated with a beam of light 242. As shown, a narrow beam of light 242 directed onto a relatively small region 230 on or adjacent to the outer surface 124 can significantly reduce the impedance of the illuminated portion of the switchable element 212, thereby creating the low impedance path 232. In such an embodiment of the switchable element 212, a low impedance path 232 can be created from any region 230 at or adjacent to any location on the surface 124 of the switchable element 212 to the other biasing electrode 204 by directing a beam of light 242 at the desired location. The light 242 can be directed from the bottom as shown in Figure 2B and/or from above (not shown) and thus through the electrode 202 and first medium 222.

Figure 3 illustrates another example 300 of the DEP device 120. That is, the example DEP device 300 of Figure 3 can replace any instance of the DEP device 120 in any of the figures.

As shown, rather than comprising a photoconductive material, the switchable element 212 of the DEP device 120 of Figure 3 comprises one or more (six are shown but there can be fewer or more) switches 302 that can be temporarily activated to electrically connect a fixed region 330 on or adjacent to the surface 124 of the switching element 212 to the biasing electrode 204. Activating a switch 302 can thus create a low impedance electrical path (like path 232 in Figure 2B) from a fixed region 330 on or adjacent to the surface 124 of the switchable element 212 to the other biasing electrode 204. Otherwise, the DEP device 120 can be like the DEP device 120 of Figure 2B and like numbered elements can be the same.

In Figure 3, multiple switches 302 are shown connecting multiple relatively small regions 330 of the surface 124 to the electrode 204. In such an embodiment, a low impedance electrical path like path 232 in Figure 2B can be temporarily created from any of the regions 330 to the electrode 204 by activating the corresponding switch 302. In such an embodiment, net DEP forces F (see Figure 2B) can be selectively created with respect to the individual regions 330 or subsets of the regions 330. Alternatively, there can be one switch 302 connecting the surface 124 to the electrode 204. In such an embodiment, the surface 124 is one region 330, and activating the switch 302 can temporarily create a net DEP force with respect to essentially the entire surface 124.

Each switch 302 can include a control 304 for activating (e.g., closing) and deactivating (e.g., opening) the switch 302. The switches 302 can be controlled in any manner. For example, the switches 302 can be controlled by the presence or absence of a beam of light on the control 304. As another example, the switches 302 can be toggled by directing a beam of light onto the control 304. As yet another example, the switches 302 can be electronically controlled rather than light controlled. The switches 302 can thus alternatively be controlled by providing control signals to the controls 304.

Figure 4 illustrates an example configuration of the switches 302 of Figure 3. In the example illustrated in Figure 4, the switchable element 212 can comprise a semiconductor material, and each switch 302 can be a bipolar transistor (BJT) 410 integrated into the semiconductor material of the switching element 212. For example, as shown, each bipolar transistor 410 can comprise a first region 402 at the outer surface 124, a second region 406 in contact with the biasing electrode 204, and a control region 404. The bipolar transistor 410 can be configured so that the first region 402 is electrically connected to the second region 406 to create a low impedance electrical path (like the path 232 in Figure 2B) from a fixed region 330 of the surface 124 to the biasing electrode 204 only when the control region 404 is activated.

In some embodiments, each bipolar transistor 410 can be activated and deactivated by beams of light. For example, each bipolar transistor 410 can be a phototransistor whose control region 404 is activated or deactivated by the presence or absence of a beam of light. Alternatively, the control region 404 of each transistor can be hardwired and thus activated and deactivated electronically.

The body of the switching element 212 and thus the second region 406 of each bipolar transistor 410 can be doped with a first type of dopant (e.g., an *n* or *p* type dopant), and the first region 402 can also be doped with the first type of dopant. The control region 404, however, can be doped with a second type of dopant (e.g., the other of a *p* or an *n* type dopant). The first region 402 of each transistor 410 can be configured to be a source or a sink of a charge carrier (i.e., either holes or electrons), and the body of the switching element 212 and thus the second region 406 of each transistor 410 can be configured to be the other of a sink or source for the charge carrier. Thus, for example, the first regions 402 can be emitters or collectors, the second regions 406 can be the other of collectors or emitters, and the control regions 404 can be bases of the transistors 410.

The switches 302 of Figure 3 can alternatively be configured as field effect transistors (FETs). For each FET, there can be a first region that provides sources or drains, a second region that provides the other of drains or sources, and a control region that gates the transistor.

As also shown in Figure 4, isolation barriers 408 can be disposed in the switching element 212 between the BJT transistors 410. Similarly, isolation barriers can separate FET transistors (not shown) in the switching element 212. The isolation barriers 408 can comprise, for example, trenches in the switching element 212, and the trenches can be filled with a switchable element.

The DEP devices 120, 300 illustrated in Figures 2A-4 are but examples of possible configurations of the DEP devices 120 in the apparatus 100. Generally speaking, the DEP devices 120 can be optoelectronic tweezers (OET) devices examples of which are disclosed in U.S. Patent No. 7,612,355 (now RE44,711), U.S. Patent No. 7,956,339, and U.S. Patent Application Publication No.2014/01243 70. Other examples of the DEP configurations include any kind of electronically controlled electronic tweezers, an example of which is disclosed in U.S. Patent No. 6,942,776.

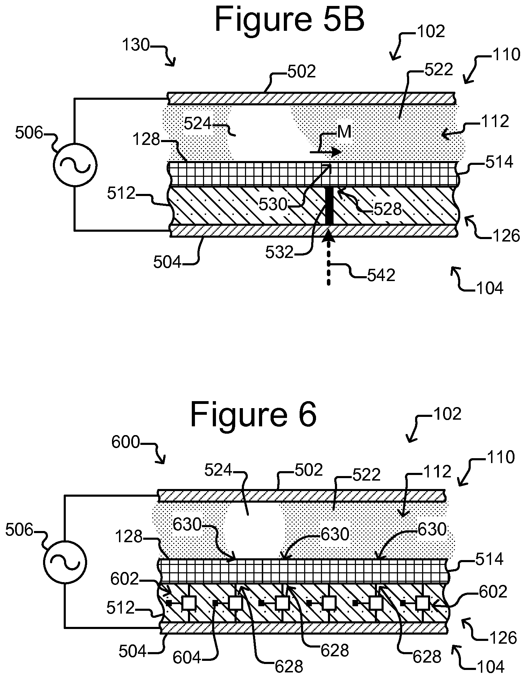

Figures 5A and 5B (which show partial, cross-sectional, side views of the enclosure 102 of Figure 1) illustrate an example of an EW device 130. Each EW device 130 in Figure 1 (or any other figure (e.g., Figure 11)) can be configured like the EW device 130 shown in Figures 5A and 5B or any variation thereof (e.g., as illustrated in Figure 6).

As shown, an EW device 130 can comprise a biasing electrode 502, a dielectric material 514, a switchable element 512, and another biasing electrode 504 (which can be an example of a first or a second electrode). The biasing electrode 502 can be part of the cover 102, and the dielectric material 514, the switchable element 512, and the other biasing electrode 504 can be part of the structure 104. Alternatively, the biasing electrode 502 can also be part of the structure 104. The chamber 112 can be between the biasing electrode 502 and the dielectric material 514, and the switchable element 512 can be disposed between the dielectric material 514 and the biasing electrode 504. The chamber 112 is illustrated in Figure 5A as containing a droplet 524 of a second liquid medium in a third liquid medium 522. The first liquid medium 222 (see Figure 2A), the second liquid medium, and the third liquid medium 522 can be any of many types of media. For example, the second medium of the droplet 524 can be an aqueous medium, such as water, an aqueous buffer (e.g., a phosphate buffer, a tris(hydroxymethyl)amionmethane (Tris) buffer, or the like), an aqueous solution (e.g., containing one or more soluble active agents), cell culture medium, and the like. The second medium can be immiscible in the third medium 522. Thus, for example, the third medium 522 can comprise an oil based medium. Examples of suitable oils include gas permeable oils, such as fluorinated oils. Fluorocarbon based oils are also examples of suitable oils.) As another example, the first medium 222 and the second medium of the droplet 524 can be the same type of medium, such as an aqueous medium.

The dielectric layer 514 can comprise a hydrophilic material and/or a hydrophobic material. The hydrophilic material can be, for example, silicon oxide (SiO2), aluminum oxide (Al3O2), or the like. The hydrophobic material can be, for example, a hydrophobic polymer (e.g., a perfluoro-polymer, such as CYTOP, or a poly(p-xylylene) polymer, such as parylene). Although shown as an outer surface of the dielectric material 514 (which would be suitable, for example, if the outer surface of the dielectric material 514 was hydrophobic), the electrowetting surface 128 can instead be an outer surface of a material (e.g., a coating) (not shown) disposed on the dielectric material 514. Such a coating can be hydrophobic. For example, the coating can comprise a hydrophobic polymer, such as polytetrafluoroethylene (PTFE, aka Teflon® by Dupont™). Regardless, the dielectric material 514 can be said to be between the electrowetting surface 128 and the switching element 512.

As shown, a second power source 506 (which can be part of the biasing device 118 of Figure 1) can be connected to the electrodes 502, 504. The second power source 506 can be, for example, an alternating current (AC) voltage or current source. The second power source 506 can create a generally uniform electric field between the electrodes 502, 504, which can result in a negligible change in a wetting property of the electrowetting surface 128 when the switching element 212 is in an inactive (e.g., open) mode, and thus a negligible change of a contact angle of the droplet 524 on the electrowetting surface 128 of the EW configuration 126.

At locations where the switchable element 512 is in an inactive (e.g., open) mode, the electrical impedance of the switchable element 512 can be greater than the impedance of the dielectric material 514, such that the voltage drop due to the second power source 506 from the biasing electrode 502 to the other biasing electrode 504 is greater across the switchable element 512 than the voltage drop across the dielectric material 514. As shown in Figure 5B, the switchable element 512 can be configured in an active (e.g., closed) mode at select regions, thereby temporarily creating a low impedance path 532 (e.g., an electrically conductive path) from a region 528 at an interface between the switchable element 512 and the dielectric material 514 to the other biasing electrode 504. The electrical impedance of the low impedance path 532 can be less than the impedance of the dielectric material 514. Thus, when the switchable element 512 is in the active mode, the voltage drop due to the second power source 506 across the dielectric material 514 can be greater than the voltage drop from the region 528 through the low impedance path 532 to the other biasing electrode 504, while the voltage drop across other portions of the switchable element 512 (e.g., portions other than region 528) remains greater than the voltage drop across the dielectric material 514. This can alter the electric field between the electrodes 502, 504 in the vicinity of the region 528, which can change the wetting property of the electrowetting surface 128 at a region 530 of the surface 128 adjacent to the region 528. For example, the foregoing can increase the wetting property of the electrowetting surface 128 at the region 530, which can cause the droplet 524 to move M to the region 530. As noted, the electrowetting surface 128 can be hydrophobic, but creating the low impedance path 532 can temporarily generate a Coulombic force across the electrowetting surface 128 that at least partially counteracts the hydrophobicity of the electrowetting surface 128, as observed by a droplet of aqueous medium resting on the electrowetting surface 128. By sequentially activating and deactivating regions 530 along the electrowetting surface 128, the droplet 524 can be moved along the electrowetting surface 128. As will be discussed in more detail with respect to Figures 12A-12C, the droplet 524 can also be moved from the electrowetting surface 128 of one EW device 130 to the electrowetting surface 128 of another EW device 130.

The switchable element 512 can be configured in any of the ways the switchable element 212 of Figures 2A and 2B can be configured. For example, the switchable element 512 shown in Figures 5A and 5B can comprise a photoconductive material (e.g., amorphous silicon) that has a relatively high electrical impedance except when illuminated with a direct beam of light 542. As shown in Figure 5B, a narrow beam of light 542 directed onto the region 528 can significantly reduced the impedance of the illuminated portion of the switchable element 512 thereby creating the low impedance path 532. In such an embodiment of the switchable element 512, a low impedance path 532 can be created from any region 528 anywhere at the interface between the switchable element 512 and the dielectric material 514 to the second electrode 504 by directing a beam of light 542 onto the region 528. The wetting property of a corresponding region 530 on the electrowetting surface 128 can thus be changed anywhere on the electrowetting surface 128.

Figure 6 illustrates another example 600 of the EW device 130. That is, the example EW device 600 of Figure 6 can replace any instance of the EW device 130 in any of the figures.

As shown, rather than comprising a photoconductive material, the switchable element 512 of the EW device 600 of Figure 6 can comprise one or more (six are shown but there can be fewer or more) switches 602 that can be temporarily activated to electrically connect a fixed region 628 at the interface between the switchable element 512 and the dielectric material 514 to the biasing electrode 504. Activating a switch 602 can thus create a low impedance path (like path 532 in Figure 5B) from a fixed region 628 at the interface between the switchable element 512 and the dielectric material 514 to the biasing electrode 504, which can change the wetting property at a corresponding fixed region 630 on the electrowetting surface 128. Otherwise, the EW device 600 can be like the EW device 130 of Figure 5B and like numbered elements can be the same. Each of the switches 602 in the switchable element 512 can be configured, for example, as transistors generally like the BJT transistors 410 illustrated in Figure 4 or the FET transistors, all discussed above.

In Figure 6, multiple switches 602 are shown connecting multiple relatively small regions 628 of the interface of the switchable element 512 to the dielectric material 514 (corresponding to multiple relatively small fixed regions 630 at or adjacent to the electrowetting surface 128) to the electrode 504. In such an embodiment, a wetting property of any one of the regions 630 (or a subset thereof) on the electrowetting surface 128 can be temporarily changed by activating a corresponding switch 602. Alternatively, there can be one switch 602 connecting the interface of the switchable element 512 to the dielectric material 514 to the electrode 504. In such an embodiment, the electrowetting surface 128 is one region 630, and activating the switch 602 can temporarily change a wetting property of essentially the entire electrowetting surface 128.

The EW devices 130, 600 illustrated in Figures 5A-6 are but examples of possible configurations of the EW devices 130 in the apparatus 100. Generally speaking, the EW devices 130 can be optoelectronic wetting (OEW) devices, examples of which are disclosed in US Patent No. 6,958,132. Other examples of the EW devices 130 include electrowetting on dielectric (EWOD) devices, which can be electronically controlled, an example of which is disclosed in U.S. Patent No. 8,685,344.

The structure 104 of Figure 1 can be physically configured to comprise one or more DEP configurations 122 and one or more EW configurations 126 in any of a variety of ways. Figures 7-9 illustrate examples.

In the example shown in Figure 7, multiple DEP configurations 122 and multiple EW configurations 126 can be integrated into a single monolithic component 702. As shown, the structure 104 can comprise a monolithic component 702, and the DEP configurations 122 and EW configurations 126 can comprise sections 704-710 of the monolithic component 702. The monolithic component 702 can comprise a semiconductor material.

For example, as shown, a first EW configuration 126a can comprise a dielectric material 514 disposed on one side of a first section 704 of the monolithic component 702 and an electrode 504 disposed on the other side of the first section 704, with section 704 configured like switchable element 512 illustrated in Figures 5A-6. For example, the first section 704 can comprise photoconductive material generally like the switchable element 512 shown in Figure 5B. As another example, the first section 704 can comprise one or more switches like the switches 602 in Figure 6, which can be configured as transistors (e.g., BJT transistors 410 of Figure 4 or FET transistors), as discussed above. A second EW configuration 126b can similarly comprise another dielectric material 514 disposed on one side of a third section 708 of the monolithic component 702 and another electrode 504 on the other side of the third section 708, with section 708 configured like the switchable element 512 illustrated in any of Figures 5A-6.

A first DEP configuration 122a can comprise a second section 706 of the monolithic component 702 and an electrode 204 disposed adjacent to the second section 706, with section 706 configured like the switchable element 212 illustrated in Figures 2A-4. For example, the second section 706 can comprise photoconductive material generally like the switchable element 212 shown in Figure 2B. As another example, the second section 706 can comprise one or more switches like the switches 302 in Figure 3, which can be configured as transistors (e.g., BJT transistors 410 of Figure 4 or FET transistors), as discussed above. A second DEP configuration 122b can similarly comprise a fourth section 710 of the monolithic component 702 and another electrode 204 disposed adjacent to the fourth section 710, with section 706 configured like the switchable element 212 illustrated in any of Figures 2A-4.

In the example shown in Figure 8, the DEP configurations 122 and the EW configurations 126 can comprise distinct structures. For example, as shown, a first EW configuration 126a can be a distinct structure that comprises a dielectric material 514 disposed on one side of a first EW configuration switching element 804 and an electrode 504 on the other side of the switching element 804. The switching element 804 can comprise, for example, semiconductor material, a printed circuit board, or the like. The switching element 804 can be configured like switchable element 512 illustrated in any of Figures 5A-6. For example, the switching element 804 can comprise photoconductive material generally like the switchable element 512 shown in Figure 5B. As another example, the switching element 804 can comprise one or more switches like the switches 602 in Figure 6, which can be configured as transistors (e.g., BJT transistors 410 of Figure 4 or FET transistors), as discussed above. A second EW configuration 126b can also be a distinct structure that comprises another dielectric material 514 disposed on one side of a second EW configuration switching element 808 and another electrode 504 on the other side of the switching element 808. The switching element 808 can be the same as or similar to the switching element 804 as discussed above.

A first DEP configuration 122a can be a distinct structure that comprises a first DEP configuration switching element 806 and an electrode 204. The switching element 806 can comprise, for example, semiconductor material, a printed circuit board, or the like. The switching element 806 can be configured like the switchable element 212 illustrated in any of Figures 2A-4. For example, the switching element 806 can comprise photoconductive material generally like the configuration of the switchable element 212 shown in Figure 2B. As another example, the switching element 806 can comprise one or more switches like the switches 302 in Figure 3, which can be configured as transistors (e.g., BJT transistors 410 of Figure 4 or FET transistors), as discussed above. A second DEP configuration 122b can also be a distinct structure that comprises a second DEP configuration switching element 810 and another electrode 204. The switching element 810 can be like the switching element 806 as discussed above.

As shown in Figure 8, the EW configurations 126a, 126b and the DEP configurations 122a, 122b can be disposed on a master structure 814. The EW configurations 126a, 126b and the DEP configurations 122a, 122b can be arranged in any pattern on the master structure 814. For example, the EW configurations 126a, 126b and the DEP configurations 122a, 122b can be disposed side by side and spaced apart by spacers 812 as illustrated. As another example, in some embodiments, there are no spacers 812, and adjacent EW configurations 126a, 126b and DEP configurations 122a, 122b can be abutted against each other.

Some embodiments do not include a master structure 814. For example, in some embodiments, there is not a master structure 814, but the EW configurations 126a, 126b and the DEP configurations 122a, 122b are adhered one to another. For example, the spacers 812 illustrated in Figure 8 can be an adhesive that adheres sides of adjacent EW configurations 126a, 126b and DEP configurations 122a, 122b to each other.

Although not shown, provisions can be provided for connecting power supplies (e.g., 206 and 506 in Figures 2A and 5A) to the electrodes 204, 504. For example, the master structure 814 can comprise one or more electrically conductive connectors (not shown) to the electrodes 204 and one or more electrically conductive connectors (not shown) to the electrodes 504. Examples of such connectors include electrically conductive vias (not shown) through the master structure 814.

Regardless, the EW configurations 126a, 126b and the DEP configurations 122a, 122b can be positioned so that the electrowetting surfaces 128 of the EW configurations 126a, 126b and the outer surfaces 124 of the DEP configurations 122a, 122b are substantially parallel and/or substantially in the same plane. The electrowetting surfaces 128 and the outer surfaces 124 can thus form the boundary 106 of the structure 104. The boundary 106 can thus be a composite surface comprising multiple outer surfaces 124 of multiple DEP configurations 122 and multiple electrowetting surfaces 128 of multiple EW configurations 126.

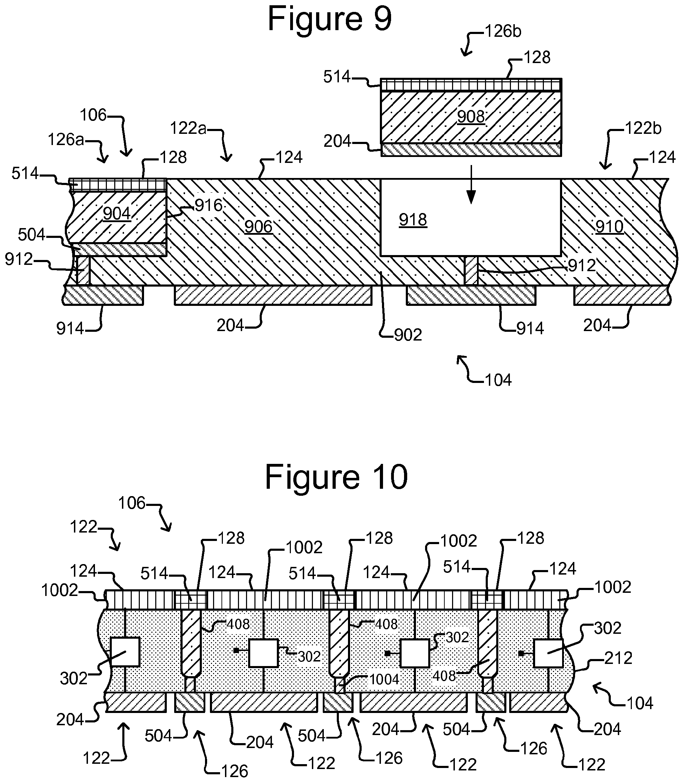

In the example shown in Figure 9, the DEP configurations 122a, 122b can comprise sections of a master switching element 902, and the EW configurations 126a, 126b can comprise stand alone, distinct structures disposed in cavities 916, 918 in the master switching element 902.

As shown, a first EW configuration 126a can be a stand alone, distinct structure that comprises a dielectric material 514 disposed on one side of a first EW configuration switching element 904 and an electrode 504 on the other side of the switching element 904. The switching element 904 can comprise, for example, semiconductor material. The switching element 904 can be configured like switchable element 512 illustrated in any of Figures 5A-6. For example, the switching element 904 can comprise photoconductive material generally like the switchable element 512 shown in Figure 5B. As another example, the switching element 904 can comprise one or more switches like the switches 602 in Figure 6, which can be configured as transistors (e.g., BJT transistors 410 of Figure 4 or FET transistors), as discussed above. A second EW configuration 126b can also be a stand alone, distinct structure that comprises another dielectric material 514 disposed on one side of a second EW configuration switching element 908 and another electrode 504 on the other side of the switching element 908. The switching element 908 can comprise, for example, semiconductor material, which can be configured like the switching element 904 as discussed above. The EW configurations 126a, 126b can be disposed in cavities 916, 918 in the master switching element 902.

A first DEP configuration 122a can comprise a first section 906 of the master switching element 902 and an electrode 204 disposed adjacent to the first section 906, which can be configured like the switchable element 212 illustrated in any of Figures 2A-4. For example, the first section 906 can comprise photoconductive material generally like the switchable element 212 shown in Figure 2B. As another example, the first section 906 can comprise one or more switches like the switches 302 in Figure 3, which can be configured as transistors (e.g., BJT transistors 410 of Figure 4 or FET transistors). A second DEP configuration 122b can similarly comprise a second section 910 of the master switching element 902 and another electrode 204 disposed adjacent to the second section 910, which can be configured like the switchable element 212 illustrated in Figures 2A-4.

As shown, the sections 906, 910 of the master switching element 902 that correspond to the DEP configurations 122a, 122b can be disposed between the cavities 916, 918 in which the EW configurations 126a, 126b are disposed. The cavities 916, 918 and the EW configurations 126a, 126b can be sized and positioned such that the outer surfaces 124 of the DEP configurations 122a, 122b and the electrowetting surfaces 128 of the EW configurations 126a, 126b and are substantially parallel and/or substantially in the same plane. The outer surfaces 124 and the electrowetting surfaces 128 can thus form the boundary 106 of the structure 104.

In the example shown in Figure 9, the DEP configurations 122 comprise sections 906, 910 of a master switching element 902, and the EW configurations 126 are stand alone, distinct structures disposed in cavities 916, 918 in a master switching element 902. Alternatively, the EW configurations 126 can comprise sections (e.g., like sections 906, 910) of the master switching element 902, and the DEP configurations 122 can be stand alone, distinct structures (e.g., like the EW configurations 126 shown in Figure 9) disposed in cavities 916, 918 of the master switching element 902.

In any of the embodiments illustrated in Figures 7-9, the first power source 206 can be connected to each of the electrodes 204 and corresponding electrodes 202 (not shown in Figures 7-9) generally as shown in Figures 2A-3. All of the electrodes 204 in Figures 7 and 8 can, for example, be electrically connected to each other. Similarly, the second power source 506 can be connected to the electrodes 504 and corresponding electrodes 502 (not shown in Figures 7 and 8) in the embodiments of Figures 7 and 8. The embodiment of Figure 9 can also facilitate connecting the second power source 506 to the electrodes 504 of the EW configurations 126. For example, as shown in Figure 9, the second power source 506 can connect to electrodes 914, which are connected (e.g., by electrical connections 912 such as vias, electrically conductive adhesive, or the like) to the electrodes 504 of the EW configurations 126a, 126b.

Figure 10 illustrates an example of the structure 104 comprising the switchable element 212 configured somewhat as shown in Figure 3, and like numbered elements in Figures 3 and 10 can be the same. As shown, the switching element 212 can comprise multiple DEP configurations 122 and multiple EW configurations 126. Each of the DEP configurations 122 can comprise a hydrophilic layer 1002 comprising the outer surface 124, which can thus be hydrophilic; an electrode 204; and a switch 302 for selectively creating a low impedance electrical path (e.g., like path 232 in Figure 2B) through the switchable element 212 to the electrode 204, as discussed above.

As also shown, the switching element 212 can include isolation barriers 408 between the DEP configurations 122, which can be part of the EW configurations 126. For example, each EW configuration 126 can comprise a dielectric material 514 comprising an electrowetting surface 128, photoconductive material disposed in one of the isolation barriers 408, and an electrode 504. As shown, an electrical connector 1004 (e.g., a via) can electrically connect the photoconductive material in an isolation barrier 408 to a corresponding electrode 504. Light directed onto the photoconductive material in one of the isolation barriers 408 can create a low impedance path (like path 532 in Figure 5B) through the photoconductive material in the illuminated barrier 408 to the electrode 504 and thereby change a wetting property of the electrowetting surface 128 of the EW configuration 126, generally as discussed above with respect to Figure 5B.

The apparatus 100 of Figure 1, including any variation discussed above or illustrated in Figures 2A-10, is an example only. Figure 11 illustrates another example configuration of the apparatus 100.

The apparatus 100' of Figure 11 can be generally similar to the apparatus 100 of Figure 1, and like numbered elements can be the same. As shown, however, the structure 104' in Figure 11 comprises multiple DEP devices 120 (each corresponding to one of the illustrated DEP configurations 122) and multiple EW devices 130 (each corresponding to one of the EW configurations 126). Some or all of the DEP devices 120 and EW devices 130 can be positioned such that the outer surfaces 124 of the DEP configurations 122 and the electrowetting surfaces 128 of the EW configurations 126 of the structure 104' are disposed in an alternating pattern. For example, all or one or more portions of the pattern of DEP devices 120 and EW devices 130 can be arranged such that rows and columns of the pattern comprise alternating outer surfaces 124 and electrowetting surfaces 128, generally as shown in Figure 11.

Figures 12A-12C show partial, cross-sectional, side views of the enclosure 102 of the apparatus 100' of Figure 11 and also illustrate an example of operation of the apparatus 100'.

As shown in Figure 12A, each DEP device 120 can comprise an electrode 202 that can be part of the cover 110. In Figure 12A, the cover 110 is illustrated as also comprising a support structure 1202 for the electrodes 202. Each DEP device 120 can also comprise a switchable element 212 and another electrode 204 generally as discussed above with respect to Figure 2A. Each DEP device 120 can also include a hydrophilic material 1002 that comprises the outer surface 124, which can thus be hydrophilic. Otherwise, each DEP device 120 can be configured and operated in any manner disclosed herein including the examples shown in Figures 2A-4. The first power source 206 can be connected to the biasing electrodes 202 and 204. In some embodiments, the biasing electrodes 202 on support 1202 can be interconnected with each other, and the biasing electrodes 204 on the switching element 1204 can similarly be interconnected with each other.

Each EW device 130 can comprise an electrode 502 that can be part of the cover 110 as shown. Each EW device 130 can also comprise a dielectric material 514, switchable element 512, and another electrode 504, generally as discussed above with respect to Figure 5A. The second power source 506 can be connected to the biasing electrodes 502 and 504. In some embodiments, the biasing electrodes 502 on support 1202 can be interconnected with each other, and the biasing electrodes 504 on the switching element 1204 can similarly be interconnected with each other. Each EW device 130 can be configured and operate in any manner disclosed herein including the examples shown in Figures 5A-6.

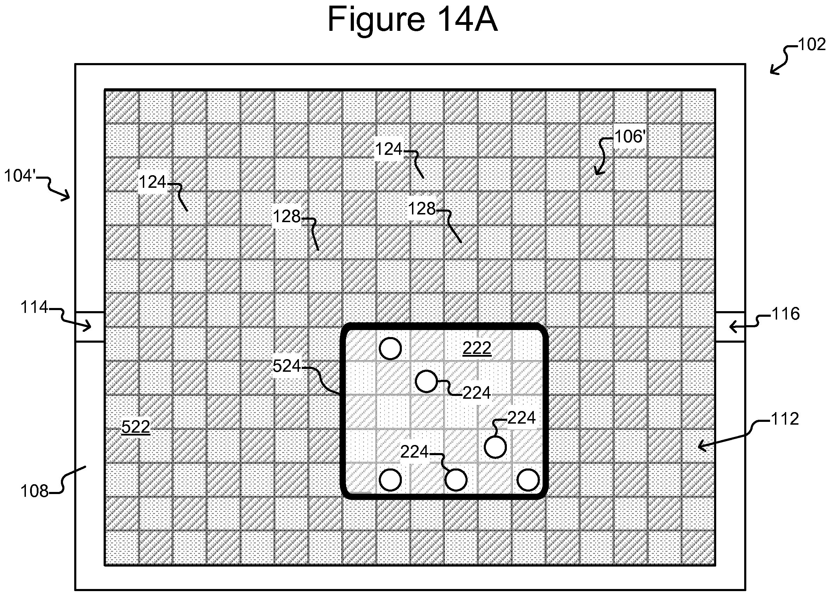

Examples of operation of the apparatus 100' are illustrated in Figures 12A-12C and Figures 14A-14C.

As shown in Figure 12A, a micro-object 224 initially disposed on an outer surface 124a of a first DEP device 120a can be moved to the outer surface 124b of a nearby DEP device 120b (e.g., a second DEP device) by activating the nearby DEP device 120b generally as described above (e.g., creating an electrically conductive path like path 232 in Figure 2B through the switchable element 212b of the nearby DEP configuration 122b) without also activating the first DEP device 120a. As discussed above, the foregoing can create a net DEP force on the micro-object 224 sufficient to move the micro-object 224 from the outer surface 124a of the first DEP device 120a to the outer surface 124b of the nearby DEP device 120b. As shown, the micro-object 224 can be moved from the outer surface 124a across an intervening electrowetting surface 128b of an adjacent EW device 130b. As also shown, the micro-object 224 can be moved while inside a droplet 524 of the first medium 222, which can be disposed in the second medium 522.

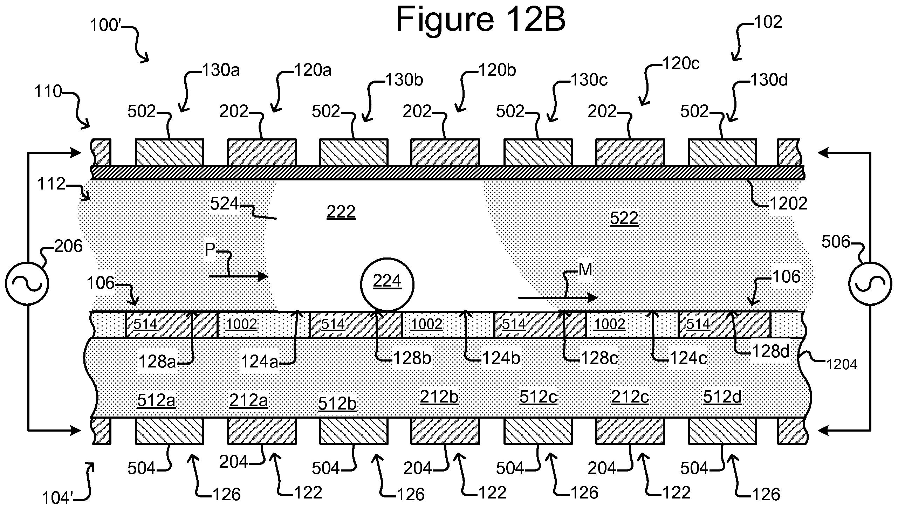

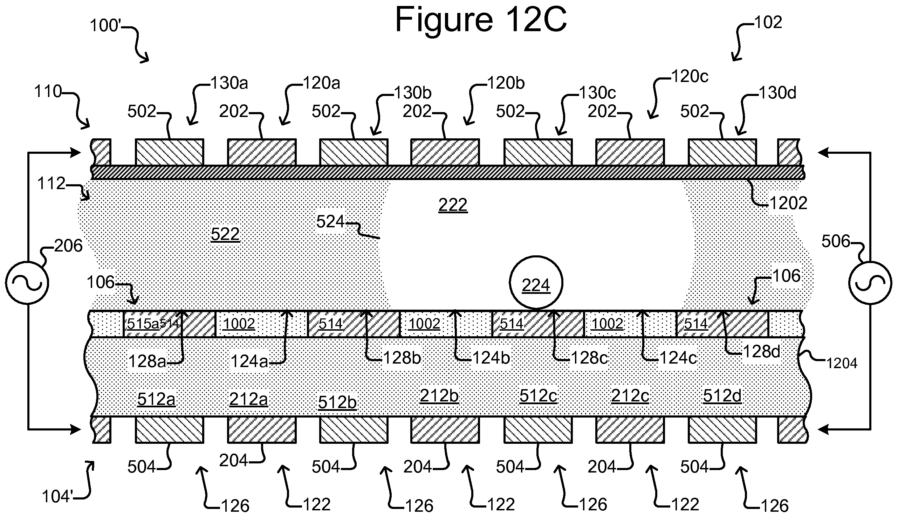

As also illustrated in Figures 12A-12C, a droplet 524 can be moved on the structural boundary 106. For example, the droplet 524, initially disposed in a first location (e.g., on outer surfaces 124a, 124b of DEP devices 120a, 120b and an electrowetting surface 128b of a first EW device 130b in the example shown in Figure 12A), can be moved to a second location by activating a nearby EW device 130c generally as described above (e.g., creating an electrically conductive path like path 532 in Figure 5B through the switchable element 512c of the nearby EW device 130c) and thereby increasing the wettability of the electrowetting surface 128c of the nearby EW device 130c sufficiently to draw an edge of the droplet 524 across the electrowetting surface 128c to the outer surface 124c of a DEP device 120c adjacent to the EW device 130c, as illustrated in Figure 12B. The foregoing can be done without also activating the electrowetting surface 128b. The droplet 524 can thus be moved from a first position on the surfaces 124a, 128b, 124b shown in Figure 12A to a second position on the surfaces 124b, 128c, 124c, as shown in Figure 12C. As illustrated in Figure 12B, liquid pressure P (e.g., applied through an inlet 114 or by a pressure device (not shown) in the chamber 112) can aide in moving the droplet 524. As also shown in Figures 12B and 12C, the micro-object 224 can move with the droplet 524 without activating any of the DEP devices 122. However, droplets like droplet 524 can be moved whether or not the droplet 524 contains one or more micro-objects like micro-object 224.

Although not shown in Figures 12A-12C, the foregoing operations of moving a micro-object 224 and a droplet 524 can be performed simultaneously in the apparatus 100' of Figures 11 and 12A-12C. For example, a micro-objet 224 can be moved in one droplet 524 as illustrated in Figure 12A while another droplet (not shown in Figures 12A-12C but can be like droplet 524) can be moved generally in the same way that the droplet 524 is moved in Figures 12A-12C.

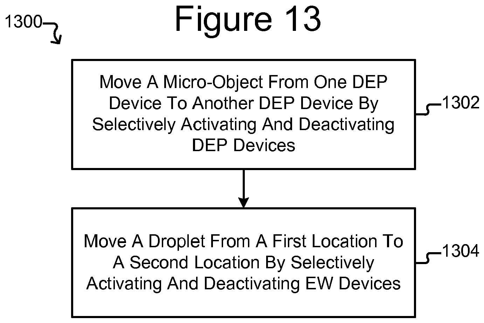

Figure 13 shows an example of a process 1300 by which the apparatus 100' of Figure 11 can be operated generally in accordance with the examples shown in Figures 12A-12C. As shown at step 1302, the process 1300 can move a micro-object from one DEP device to another by selectively activating and deactivating (as needed) one or more DEP devices, which can be performed generally as discussed above (e.g., as illustrated in Figure 12A). At step 1304, the process 1300 can move a droplet from a first location to a second location, which can also be performed generally as discussed above (e.g., as shown in Figures 12A-12C). Indeed, the process 1300 can be performed in accordance with the examples illustrated in Figures 12A-12C including any variation or additional steps or processing discussed above with respect to Figures 12A-12C.

Figures 14A-14C illustrate another example of an operation of the microfluidic device 100' of Figure 11. Figures 14A-14C show a top view of the apparatus 100' with its cover 110 removed. Biasing devices 206, 506 are not shown but can be connected to the apparatus 100' generally as shown in Figures 12A-12C.

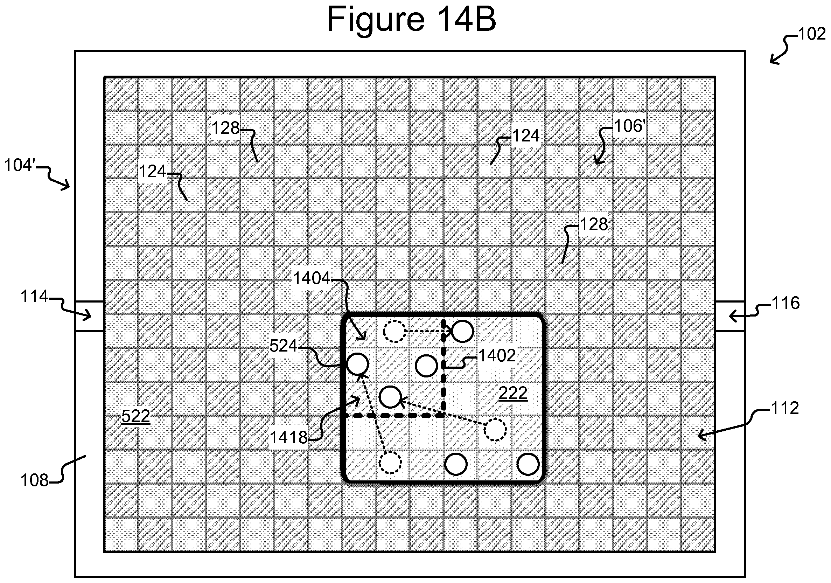

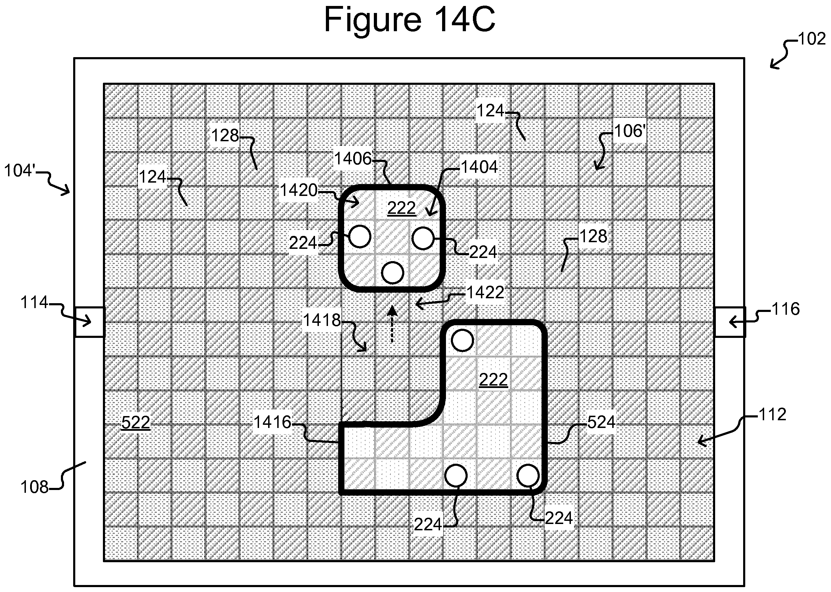

In the example shown in Figure 14A, a droplet 524 of the first medium 222 is disposed in the second medium 522 in the chamber 112, and micro-objects 224 can be disposed inside the droplet 524. As shown in Figure 14B, one or more of the micro-objects 224 in the droplet 524 can be moved into or out of a selected sub-region 1402 of the droplet 524 until there is a selected group 1404 of the micro-objects in the sub-region 1402 of the droplet 524. As shown in Figure 14C, the sub-region 1402 of the droplet 524 can be moved away and thus separate from the droplet 524 forming a new droplet 1406 that contains the selected group 1404 of micro-objects 224. The micro-objects 224 can be moved (as shown in Figure 14B) generally as discussed above (e.g., from the outer surface 124 of one DEP device 120 (not shown in Figures 14A-14C) to the outer surface 124 of a nearby DEP device 120 (not shown in Figures 14A-14C), and the sub-region 1404 can be moved and thus pulled away and separated from the droplet 524 to form a new droplet 1406 generally as discussed above (e.g., by selectively changing a wetting property of ones of the electrowetting surfaces 128 of adjacent ones of the EW devices 130 (not shown in Figures 14A-14C).

For example, the sub-region 1402 of the droplet 524 can initially be disposed in a first location 1418 in the chamber 112 as shown in Figure 14B. The location 1418 can include first outer surfaces 124 of a first set of the DEP devices 122 and first electrowetting surfaces 128 of a first set of the EW devices 130 on which the sub-region 1402 is initially disposed as shown in Figure 14B. Generally in accordance with the discussion above of moving droplets, the sub-region 1402 can be separated from the droplet 524, forming a new droplet 1406, by moving the sub-region 1402 of the droplet to a second location 1420 as shown in Figure 14C. The second location 1420 can include second outer surfaces 124 of a second set of the DEP devices 122 and second electrowetting surfaces 128 of a second set of the EW devices 130. The sub-region 1402 can be moved from the first location 1418 to the second location 1420 by, for example, sequentially activating one or more (one is shown but there can be more) of the EW devices 130 in a third location 1422. (The EW devices 130 in the third location 1422 can be an example of a third set of the EW devices 130 and their electrowetting surfaces 128 can be an example of third electrowetting surfaces.) This can be done, for example, without also activating EW devices 130 on whose electrowetting surfaces 128 all of the droplet 524 except for the sub-region 1402 is disposed. Generally as discussed above, this can move the sub-region 1402 of the droplet 524 over the third location 1422. Thereafter, the EW devices 128 in the third location 1422 can be deactivated, and one or more of the EW devices 130 in the second location can be activated, which generally as discussed above, can further move the sub-region 1402 (now a new droplet 1406) to the second location 1420 shown in Figure 14C. As a means of facilitating the formation of the new droplet 1406, the deactivation of the EW devices 130 in the third location 1422 and the activation of the EW devices 130 in the second location 1420 can be accompanied by the activation of at least some of the EW devices 130 in the sub-region 1416 covered by the remaining portion of droplet 524.

A new droplet 1406 can be created from an existing droplet 524 as illustrated in Figures 14A-14C regardless of whether there are any micro-objects 224 in the existing droplet 524 or the new droplet 1406. Moreover, more than one new droplet (not shown, but can be like new droplet 1406) can be created from the existing droplet 524.

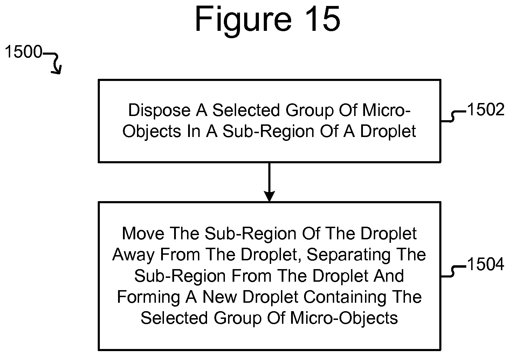

Figure 15 illustrates an example of a process 1500 by which the apparatus 100' of Figure 11 can be operated generally in accordance with the examples shown in Figures 14A-14C. As shown at step 1502, the process 1500 can dispose a selected group of micro-objects in a sub-region of a droplet, which can be performed generally as discussed above (e.g., as illustrated in Figures 14A and 14B). At step 1504, the process 1500 can move the sub-region of the droplet away from the droplet, separating the sub-region from the droplet and thereby forming a new droplet, which can also be performed generally as discussed above (e.g., as shown in Figure 14C). Indeed, the process 1500 can be performed in accordance with any of the examples illustrated in Figures 14A-14C, including any variation or additional steps or processing discussed above with respect to Figures 14A-14C.

Although specific embodiments and applications of the invention have been described in this specification, these embodiments and applications are exemplary only, and many variations are possible. For example, the descriptions provided above (e.g., in connection with Figures 2b and 12A) for using the DEP configurations to move micro-objects have discussed the DEP force as being attractive with respect to the micro-objects (i.e., positive DEP). However, as well known in the art, the nature of the micro-particles, the conductivity of the medium, and the voltage potential and frequency of the power source, among other things, can be adjusted to achieve repulsion of micro-objects (i.e., negative DEP).

Furthermore, the structures and microfluidic devices described herein can include a droplet generator for providing fluidic droplets to a chamber or other region in the structures/devices. The droplet generator can comprise one or more fluidic inputs and a fluidic output, which can be connected to the chamber or other region. Aqueous medium, immiscible medium, biological micro-objects, reagents, and/or other biological media can be loaded through the inputs into the droplet generator. The droplet generator can generate and output droplets of the aqueous medium (which can, but need not, contain one or more biological micro-objects), reagents, or other biological medium. Such droplets can be merged with droplets already present in the structures/devices, thereby allowing for grouping of biological micro-objects, processing of biological micro-objects (e.g., via biochemical and/or molecular biological reactions), analysis of biological micro-objects (e.g., using capture beads and/or detectable binding agents), and the like. The droplet generator can be integral to the structures/devices or connected thereto. For example, the droplet generator can be part of an electrowetting section of a microfluidic device and can thus comprise an electrowetting configuration with a photoconductive substrate (e.g., as illustrated in U.S. Patent No. 6,958,132), a photo-actuated circuit substrate (e.g., as illustrated in U.S. Patent Application Publication No. 2014/0124370 (attorney docket no. BL9-US)), a phototransistor-based substrate (e.g., as illustrated in U.S. Patent No. 7,956,339), or an electrically-actuated circuit substrate (e.g., as illustrated in U.S. Patent No. 8,685,344). Alternatively, the droplet generator can have a T- or Y-shaped hydrodynamic structure (e.g., as illustrated in U.S. Patents & Patent Application Publication Nos. 7,708,949, 7,041,481 (reissued as RE41,780), 2008/0014589, 2008/0003142, 2010/0137163, and 2010/0172803).

## Claims

1. A structure comprising:
a dielectrophoresis, DEP, configuration (122) comprising an outer surface (124), a first electrode (204), and a first switchable element (212) disposed between said outer surface and said first electrode, wherein said first switchable element is configured to temporarily create an electrically conductive first path from a first region of said outer surface through said switchable element to said first electrode; and
an electrowetting, EW, configuration (126) comprising an electrowetting surface (128), a second electrode (504), a dielectric layer (514) disposed between said electrowetting surface and said second electrode and a second switchable element (512) disposed between said dielectric layer and said second electrode, wherein said second switchable element is configured to temporarily create an electrically conductive path through said second switchable element and thereby change a wetting property of a second region of said electrowetting surface adjacent to said second path,
wherein said DEP configuration is disposed adjacent to said EW configuration such that said outer surface of said DEP configuration is adjacent to said electrowetting surface.

2. The structure of claim 1, wherein:
said switchable element of said DEP configuration comprises a photoconductive material, and
selectively illuminating a portion of said photoconductive material adjacent to said first region reduces an electrical impedance of said portion, thereby creating said first path.

3. The structure of claim 1, wherein said switchable element of said DEP configuration comprises a switch from said first region of said outer surface through said switchable element to said first electrode; and optionally wherein said switch comprises a feature selected from the group consisting of: being light activated and comprising a transistor embedded in said switchable element.

4. The structure of claim 3, wherein said switchable element of said DEP configuration further comprises isolation barriers about said switch, and optionally wherein said switchable element of said EW configuration comprises photoconductive material disposed in said isolation barriers.

5. The structure of claim 1, wherein said outer surface of said DEP configuration is substantially parallel to said electrowetting surface of said EW configuration and wherein the structure further comprises a monolithic component, wherein:
a first section (504) of said monolithic component comprises said switchable element of said DEP configuration, and
a second section (506) of said monolithic component comprises said switchable element of said EW configuration.

6. The structure of claim 1 further comprising a support structure, wherein:
a first section of said support structure comprises said switchable element of said DEP configuration, and
said EW configuration is disposed in a cavity in a second section of said support structure adjacent to said first section, and optionally wherein said switchable element of said EW configuration comprises a feature from the group consisting of: a photoconductive material and a switch through said switchable element to said first electrode.

7. The structure of claim 1, wherein said outer surface of said DEP configuration and said electrowetting surface of said EW configuration are substantially parallel, and optionally wherein said outer surface of said DEP configuration and said electrowetting surface of said EW configuration comprise a feature selected from the group consisting of: being substantially in a same plane and forming a substantially continuous composite surface.

8. The structure of claim 1 further comprising:
a plurality of said DEP configurations each comprising an outer surface, and
a plurality of said EW configurations each comprising an electrowetting surface,
wherein at least some of said DEP configurations and said EW configurations are disposed such that said outer surfaces and said electrowetting surfaces are in alternating patterns; and optionally wherein said outer surfaces of said DEP configurations and said electrowetting surfaces of said EW configurations comprise a feature selected from the group of: being substantially in a same plane, and forming a substantially continuous composite surface.

9. The structure of claim 8, wherein:
said outer surfaces of said DEP configurations are hydrophilic, and
said electrowetting surfaces of said EW configurations are hydrophobic.

10. The structure of any one of claims 1 to 9 further comprising a droplet generator.

11. A process of operating a microfluidic apparatus comprising a structure according to any of claims 8 to 10 said structure further comprising a chamber, said process comprising:
moving a micro-object disposed in a droplet of liquid medium_{_}from a first outer surface of a first of said DEP devices to a second outer surface of a second of said DEP devices by activating said second DEP device and thereby creating a net DEP force on said micro-object in a direction of said second DEP device; and
moving said droplet of said liquid medium from a first location to a second location in said chamber by activating a second of said EW devices and thereby changing a wetting property of a second electrowetting surface of said second EW device,
wherein:
in said first location said droplet is disposed in part on a first electrowetting surface of a first of said EW devices but not on said second electrowetting surface of said second EW device;
in said second location said droplet is disposed in part on said second electrowetting surface of said second EW device but not on said first electrowetting surface of said first EW device; and
said micro-object moves with said droplet.

12. The process of claim 11, wherein said moving said droplet comprises moving part of said droplet over an outer surface of one of said DEP devices disposed between said first EW device and said second EW device and wherein:
said outer surface of said one of said DEP devices is hydrophilic, and
said first electrowetting surface and said second electrowetting surface are hydrophobic; or wherein said moving said micro-object comprises moving said micro-object from said first outer surface, across an electrowetting surface of an adjacent one of said EW devices, to said second outer surface.

13. A process of manipulating a droplet of liquid medium in a microfluidic apparatus comprising a chamber, and a structure according to any of claims 8 to 10, said process comprising:
disposing a droplet of a first liquid medium on outer surfaces of a first set of said DEP devices and electrowetting surfaces of a first set of said EW devices;
separating a first part of said droplet from a second part of said droplet by activating electrowetting surfaces of a second set of said EW devices and thereby changing a wetting property of said electrowetting surfaces of said second set.

14. The process of claim 13, wherein said separating comprises:
activating electrowetting surfaces of a third set of said EW devices disposed between said first set of said EW devices and said second set of said EW devices, and
thereafter activating said electrowetting surfaces of said second set of EW devices.

15. The process of claim 14, comprising a feature selected from the group consisting of:
none of said DEP devices in said second set of DEP devices being also in said first set of DEP devices,
none of said EW devices in said second set of EW devices being also in said first set of EW devices or said third set of EW devices, and
none of said EW devices in said first set of EW devices being also in said third set of EW devices; and
said second location being separated from said first location and not overlapping said first location.

16. The process of claim 14, comprising a feature selected from the group consisting of: said separating said first part of said droplet comprising a first group of micro-objects disposed in said first part of said droplet moving with said first part of said droplet from said first location to said second location; and, prior to said separating said first part of said droplet, selecting said first group of micro-objects from a larger group of micro-objects in said droplet.

## Patentansprüche

1. Struktur, umfassend:
eine Dielektrophorese-DEP-Anordnung (122), umfassend eine Außenoberfläche (124), eine erste Elektrode (204) und ein erstes schaltbares Element (212), das zwischen der Außenoberfläche und der ersten Elektrode angeordnet ist, wobei das erste schaltbare Element dafür gestaltet ist, vorübergehend einen elektrisch leitfähigen ersten Pfad von einem ersten Bereich der Außenoberfläche durch das schaltbare Element zu der ersten Elektrode zu erzeugen; und
eine Elektrobenetzungs-EW-Anordnung (126), umfassend eine Elektrobenetzungsoberfläche (128), eine zweite Elektrode (504), eine dielektrische Schicht (514), die zwischen der Elektrobenetzungsoberfläche und der zweiten Elektrode angeordnet ist, und ein zweites schaltbares Element (512), das zwischen der dielektrischen Schicht und der zweiten Elektrode angeordnet ist, wobei das zweite schaltbare Element dafür gestaltet ist, vorübergehend einen elektrisch leitfähigen Pfad durch das zweite schaltbare Element zu erzeugen und dadurch eine Benetzungseigenschaft eines zweiten Bereichs der Elektrobenetzungsoberfläche benachbart zu dem zweiten Pfad zu verändern,
wobei die DEP-Anordnung benachbart zu der EW-Anordnung angeordnet ist, so dass die Außenoberfläche der DEP-Anordnung zu der Elektrobenetzungsoberfläche benachbart ist.

2. Struktur gemäß Anspruch 1, wobei:
das schaltbare Element der DEP-Anordnung ein fotoleitfähiges Material umfasst und
selektives Beleuchten eines Teils des fotoleitfähigen Materials benachbart zu dem ersten Bereich die elektrische Impedanz des Bereichs verringert und dadurch den ersten Pfad erzeugt.

3. Struktur gemäß Anspruch 1, wobei das schaltbare Element der DEP-Anordnung einen Schalter von dem ersten Bereich der Außenoberfläche durch das schaltbare Element zu der ersten Elektrode umfasst; und wobei der Schalter gegebenenfalls ein Merkmal ausgewählt aus der Gruppe bestehend aus: lichtaktiviert zu sein und einen in dem schaltbaren Element eingebetteten Transistor zu umfassen umfasst.

4. Struktur gemäß Anspruch 3, wobei das schaltbare Element der DEP-Anordnung ferner Isolationssperren um den Schalter umfasst, und wobei gegebenenfalls das schaltbare Element der EW-Anordnung fotoleitfähiges Material, das in den Isolationssperren angeordnet ist, umfasst.

5. Struktur gemäß Anspruch 1, wobei die Außenoberfläche der DEP-Anordnung im Wesentlichen parallel zu der Elektrobenetzungsoberfläche der EW-Anordnung ist und wobei die Struktur ferner eine monolithische Komponente umfasst, wobei:
ein erster Abschnitt (504) der monolithischen Komponente das schaltbare Element der DEP-Anordnung umfasst und
ein zweiter Abschnitt (506) der monolithischen Komponente das schaltbare Element der EW-Anordnung umfasst.

6. Struktur gemäß Anspruch 1, ferner umfassend eine Trägerstruktur, wobei:
ein erster Abschnitt der Trägerstruktur das schaltbare Element der DEP-Anordnung umfasst und
die EW-Anordnung in einem Hohlraum in einem zweiten Abschnitt der Trägerstruktur benachbart zu dem ersten Abschnitt angeordnet ist und wobei das schaltbare Element der EW-Anordnung gegebenenfalls ein Element aus der Gruppe bestehend aus: einem fotoleitfähigen Material und einem Schalter durch das schaltbare Element zu der ersten Elektrode umfasst.

7. Struktur gemäß Anspruch 1, wobei die Außenoberfläche der DEP-Anordnung und die Elektrobenetzungsoberfläche der EW-Anordnung im Wesentlichen parallel sind und wobei die Außenoberfläche der DEP-Anordnung und die Elektrobenetzungsoberfläche der EW-Anordnung gegebenenfalls ein Merkmal ausgewählt aus der Gruppe bestehend aus: im Wesentlichen in der gleichen Ebene liegen und eine im Wesentlichen durchgehende Verbundoberfläche bilden aufweisen.

8. Struktur gemäß Anspruch 1, umfassen:
eine Vielzahl der DEP-Anordnungen, die jeweils eine Außenoberfläche umfassen, und
eine Vielzahl der EW-Anordnungen, die jeweils eine Elektrobenetzungsoberfläche umfassen,
wobei wenigstens manche der DEP-Anordnungen und der EW-Anordnungen so angeordnet sind, dass die Außenoberflächen und die Elektrobenetzungsoberflächen in abwechselnden Strukturen vorliegen; und wobei die Außenoberflächen der DEP-Anordnungen und die Elektrobenetzungsoberflächen der EW-Anordnungen gegebenenfalls ein Merkmal ausgewählt ist aus der Gruppe: im Wesentlichen in der gleichen Ebene liegen und eine im Wesentlichen durchgehende Verbundoberfläche bilden aufweisen.

9. Struktur gemäß Anspruch 8, wobei:
die Außenoberflächen der DEP-Anordnungen hydrophil sind und
die Elektrobenetzungsoberflächen der EW-Anordnungen hydrophob sind.

10. Struktur gemäß einem der Ansprüche 1 bis 9, ferner umfassend einen Tröpfchengenerator.

11. Verfahren zum Betreiben einer Mikrofluidikvorrichtung, die eine Struktur gemäß einem der Ansprüche 8 bis 10 umfasst, wobei die Struktur ferner eine Kammer umfasst, wobei das Verfahren umfasst:
Bewegen eines Mikroobjekts, das in einem Tröpfchen von flüssigem Medium angeordnet ist, von einer ersten Außenoberfläche einer ersten der DEP-Vorrichtungen zu einer zweiten Außenoberfläche einer zweiten der DEP-Vorrichtungen durch Aktivieren der zweiten DEP-Vorrichtung und dadurch Erzeugen einer DEP-Nettokraft an dem Mikroobjekt in einer Richtung der zweiten DEP-Vorrichtung; und
Bewegen des Tröpfchens des flüssigen Mediums von einem ersten Ort zu einem zweiten Ort in der Kammer durch Aktivieren einer zweiten der EW-Vorrichtungen und dadurch Verändern einer Benetzungseigenschaft einer zweiten Elektrobenetzungsoberfläche der zweiten EW-Vorrichtung,
wobei:
das Tröpfchen an dem ersten Ort zum Teil auf einer ersten Elektrobenetzungsoberfläche einer ersten der EW-Vorrichtungen aber nicht auf der zweiten Elektrobenetzungsoberfläche der zweiten EW-Vorrichtung angeordnet ist;
das Tröpfchen an dem zweiten Ort zum Teil auf der zweiten Elektrobenetzungsoberfläche der zweiten EW-Vorrichtung aber nicht auf der ersten Elektrobenetzungsoberfläche der ersten EW-Vorrichtung angeordnet ist; und
sich das Mikroobjekt mit dem Tröpfchen bewegt.

12. Verfahren gemäß Anspruch 11, wobei das Bewegen des Tröpfchens Bewegen eines Teils des Tröpfchens über eine Außenoberfläche einer der DEP-Vorrichtungen, die zwischen der ersten EW-Vorrichtung und der zweiten EW-Vorrichtung angeordnet ist, umfasst, und wobei:
die Außenoberfläche der einen der DEP-Anordnungen hydrophil ist und
die erste Elektrobenetzungsoberfläche und die zweite Elektrobenetzungsoberfläche hydrophob sind; oder wobei das Bewegen des Mikroobjekts Bewegen des Mikroobjekts von der ersten Außenoberfläche über eine Elektrobenetzungsoberfläche einer benachbarten der EW-Vorrichtungen zu der zweiten Außenoberfläche umfasst.

13. Verfahren zum Manipulieren eines Tröpfchens von flüssigem Medium in einer Mikrofluidikvorrichtung, die eine Kammer und eine Struktur gemäß einem der Ansprüche 8 bis 10 umfasst, wobei das Verfahren umfasst:
Anordnen eines Tröpfchens eines ersten flüssigen Mediums auf Außenoberflächen eines ersten Satzes der DEP-Vorrichtungen und Elektrobenetzungsoberflächen eines ersten Satzes der EW-Vorrichtungen;
Trennen eines ersten Teils des Tröpfchens von einem zweiten Teil des Tröpfchens durch Aktivieren von Elektrobenetzungsoberflächen eines zweiten Satzes der EW-Vorrichtungen und dadurch Verändern einer Benetzungseigenschaft der Elektrobenetzungsoberflächen des zweiten Satzes.

14. Verfahren gemäß Anspruch 13, wobei das Trennen umfasst:
Aktivieren von Elektrobenetzungsoberflächen eines dritten Satzes der EW-Vorrichtungen, der zwischen dem ersten Satz der EW-Vorrichtungen und dem zweiten Satz der EW-Vorrichtungen angeordnet ist, und
anschließend Aktivieren der Elektrobenetzungsoberflächen des zweiten Satzes von EW-Vorrichtungen.

15. Verfahren gemäß Anspruch 14, umfassend ein Merkmal ausgewählt aus der Gruppe bestehend aus:
keine der DEP-Vorrichtungen in dem zweiten Satz von DEP-Vorrichtungen liegt auch in dem ersten Satz von DEP-Vorrichtungen,
keine der EW-Vorrichtungen in dem zweiten Satz von EW-Vorrichtungen liegt auch in dem ersten Satz von EW-Vorrichtungen oder dem dritten Satz von EW-Vorrichtungen und
keine der EW-Vorrichtungen in dem ersten Satz von EW-Vorrichtungen liegt auch in dem dritten Satz von EW-Vorrichtungen; und
der zweite Ort ist von dem ersten Ort getrennt und überlappt nicht mit dem ersten Ort.

16. Verfahren gemäß Anspruch 14, umfassend ein Merkmal ausgewählt aus der Gruppe bestehend aus: das Trennen des ersten Teils des Tröpfchens umfasst, dass sich eine erste Gruppe von Mikroobjekten, die in dem ersten Teil des Tröpfchens angeordnet sind, mit dem ersten Teil des Tröpfchens von dem ersten Ort zu dem zweiten Ort bewegt; und vor dem Trennen des ersten Teils des Tröpfchens Auswählen der ersten Gruppe von Mikroobjekten aus einer größeren Gruppe von Mikroobjekten in dem Tröpfchen.

## Revendications

1. Structure comprenant :
une configuration de diélectrophorèse (DEP) (122) comprenant une surface externe (124), une première électrode (204) et un premier élément commutable (212) disposé entre ladite surface externe et ladite première électrode, dans laquelle ledit premier élément commutable est configuré pour créer temporairement un premier trajet électroconducteur à partir d'une première région de ladite surface externe à travers ledit élément commutable jusqu'à ladite première électrode ; et
une configuration d'électromouillage (EW) (126) comprenant une surface d'électromouillage (128), une seconde électrode (504), une couche diélectrique (514) disposée entre ladite surface d'électromouillage et ladite seconde électrode et un second élément commutable (512) disposé entre ladite couche diélectrique et ladite seconde électrode, dans laquelle ledit second élément commutable est configuré pour créer temporairement un trajet électroconducteur à travers ledit second élément commutable et pour changer, de ce fait, une propriété de mouillage d'une seconde région de ladite surface d'électromouillage adjacente audit second trajet,
dans laquelle ladite configuration de diélectrophorèse est disposée adjacente à ladite configuration d'électromouillage de telle sorte que ladite surface externe de ladite configuration de diélectrophorèse soit adjacente à ladite surface d'électromouillage.

2. Structure selon la revendication 1, dans laquelle :
ledit élément commutable de ladite configuration de diélectrophorèse comprend un matériau photoconducteur, et
l'éclairage sélectif d'une partie dudit matériau photoconducteur adjacente à ladite première région réduit une impédance électrique de ladite partie, ce qui permet de créer ledit premier trajet.

3. Structure selon la revendication 1, dans laquelle ledit élément commutable de ladite configuration de diélectrophorèse comprend un commutateur à partir de ladite première région de ladite surface externe à travers ledit élément commutable jusqu'à ladite première électrode ; et, facultativement, dans laquelle ledit commutateur comprend une caractéristique sélectionnée dans le groupe constitué par : une caractéristique qui est activée par la lumière et comprenant un transistor intégré dans ledit élément commutable.

4. Structure selon la revendication 3, dans laquelle ledit élément commutable de ladite configuration de diélectrophorèse comprend en outre des barrières d'isolation autour dudit commutateur et, facultativement, dans laquelle ledit élément commutable de ladite configuration d'électromouillage comprend un matériau photoconducteur disposé dans lesdites barrières d'isolation.

5. Structure selon la revendication 1, dans laquelle ladite surface externe de ladite configuration de diélectrophorèse est sensiblement parallèle à ladite surface d'électromouillage de ladite configuration d'électromouillage et dans laquelle la structure comprend en outre un composant monolithique, dans laquelle :
une première section (504) dudit composant monolithique comprend ledit élément commutable de ladite configuration de diélectrophorèse, et
une seconde section (506) dudit composant monolithique comprend ledit élément commutable de ladite configuration d'électromouillage.

6. Structure selon la revendication 1, comprenant en outre une structure de support, dans laquelle :
une première section de ladite structure de support comprend ledit élément commutable de ladite configuration de diélectrophorèse, et
ladite configuration d'électromouillage est disposée dans une cavité dans une seconde section de ladite structure de support adjacente à ladite première section et, facultativement, dans laquelle ledit élément commutable de ladite configuration d'électromouillage comprend une caractéristique dans le groupe constitué par : un matériau photoconducteur et un commutateur à travers ledit élément commutable jusqu'à ladite première électrode.

7. Structure selon la revendication 1, dans laquelle ladite surface externe de ladite configuration de diélectrophorèse et ladite surface d'électromouillage de ladite configuration d'électromouillage sont sensiblement parallèles et, facultativement, dans laquelle ladite surface externe de ladite configuration de diélectrophorèse et ladite surface d'électromouillage de ladite configuration d'électromouillage comprennent une caractéristique sélectionnée dans le groupe constitué par : une caractéristique qui est sensiblement dans un même plan et qui forme une surface composite sensiblement continue.

8. Structure selon la revendication 1, comprenant en outre :
une pluralité desdites configurations de diélectrophorèse comprenant chacune une surface externe, et
une pluralité desdites configurations d'électromouillage comprenant chacune une surface d'électromouillage,
dans laquelle au moins certaines desdites configurations de diélectrophorèse et desdites configurations d'électromouillage sont disposées de telle sorte que lesdites surfaces externes et lesdites surfaces d'électromouillage sont dans des motifs alternés ; et, facultativement, dans laquelle lesdites surfaces externes desdites configurations de diélectrophorèse et lesdites surfaces d'électromouillage desdites configurations d'électromouillage comprennent une caractéristique sélectionnée dans le groupe constitué par : une caractéristique qui est sensiblement dans un même plan et qui forme une surface composite sensiblement continue.

9. Structure selon la revendication 8, dans laquelle :
lesdites surfaces externes desdites configurations de diélectrophorèse sont hydrophiles, et
lesdites surfaces d'électromouillage desdites configurations d'électromouillage sont hydrophobes.

10. Structure selon l'une quelconque des revendications 1 à 9, comprenant en outre un générateur de gouttelette.

11. Procédé de fonctionnement d'un appareil microfluidique comprenant une structure selon l'une quelconque des revendications 8 à 10, ladite structure comprenant en outre une chambre, ledit procédé consistant :
à déplacer un micro-objet disposé dans une gouttelette de milieu liquide depuis une première surface externe d'un premier dispositif de diélectrophorèse desdits dispositifs de diélectrophorèse jusqu'à une seconde surface externe d'un second dispositif de diélectrophorèse desdits dispositifs de diélectrophorèse en activant ledit second dispositif de diélectrophorèse et, de ce fait, à créer une force nette de diélectrophorèse sur ledit micro-objet dans une direction dudit second dispositif de diélectrophorèse ; et
à déplacer ladite gouttelette dudit milieu liquide depuis un premier emplacement jusqu'à un second emplacement dans ladite chambre en activant un second dispositif d'électromouillage desdits dispositifs d'électromouillage et, de ce fait, à changer une propriété de mouillage d'une seconde surface d'électromouillage dudit second dispositif d'électromouillage,
dans lequel :
audit premier emplacement, ladite gouttelette est disposée en partie sur une première surface d'électromouillage d'un premier dispositif d'électromouillage desdits dispositifs d'électromouillage mais pas sur ladite seconde surface d'électromouillage dudit second dispositif d'électromouillage ;
audit second emplacement, ladite gouttelette est disposée en partie sur ladite seconde surface d'électromouillage dudit second dispositif d'électromouillage mais pas sur ladite première surface d'électromouillage dudit premier dispositif d'électromouillage ; et
ledit micro-objet se déplace avec ladite gouttelette.

12. Procédé selon la revendication 11, dans lequel ledit déplacement de ladite gouttelette consiste à déplacer une partie de ladite gouttelette sur une surface externe de l'un desdits dispositifs de diélectrophorèse disposés entre ledit premier dispositif d'électromouillage et ledit second dispositif d'électromouillage et dans lequel :
ladite surface externe dudit dispositif de diélectrophorèse desdits dispositifs de diélectrophorèse est hydrophile, et
ladite première surface d'électromouillage et ladite seconde surface d'électromouillage sont hydrophobes ;
ou dans lequel ledit déplacement dudit micro-objet consiste à déplacer ledit micro-objet depuis ladite première surface externe, à travers une surface d'électromouillage d'un dispositif d'électromouillage adjacent desdits dispositifs d'électromouillage, jusqu'à ladite seconde surface externe.

13. Procédé de manipulation d'une gouttelette de milieu liquide dans un appareil microfluidique comprenant une chambre et une structure selon l'une quelconque des revendications 8 à 10, ledit procédé consistant :
à disposer une gouttelette d'un premier milieu liquide sur des surfaces externes d'un premier ensemble desdits dispositifs de diélectrophorèse et sur des surfaces d'électromouillage d'un premier ensemble desdits dispositifs d'électromouillage ;
à séparer une première partie de ladite gouttelette d'une seconde partie de ladite gouttelette en activant des surfaces d'électromouillage d'un deuxième ensemble desdits dispositifs d'électromouillage et, de ce fait, à changer une propriété de mouillage desdites surfaces d'électromouillage dudit deuxième ensemble.

14. Procédé selon la revendication 13, dans lequel ladite séparation consiste :
à activer des surfaces d'électromouillage d'un troisième ensemble desdits dispositifs d'électromouillage disposé entre ledit premier ensemble desdits dispositifs d'électromouillage et ledit deuxième ensemble desdits dispositifs d'électromouillage, et
par la suite, à activer lesdites surfaces d'électromouillage dudit deuxième ensemble de dispositifs d'électromouillage.

15. Procédé selon la revendication 14, comprenant une caractéristique sélectionnée dans le groupe constitué par :
aucun desdits dispositifs de diélectrophorèse dans ledit second ensemble de dispositifs de diélectrophorèse ne se trouve également dans ledit premier ensemble de dispositifs de diélectrophorèse,
aucun desdits dispositifs d'électromouillage dans ledit deuxième ensemble de dispositifs d'électromouillage ne se trouve également dans ledit premier ensemble de dispositifs d'électromouillage ou dans ledit troisième ensemble de dispositifs d'électromouillage, et
aucun desdits dispositifs d'électromouillage dans ledit premier ensemble de dispositifs d'électromouillage ne se trouve également dans ledit troisième ensemble de dispositifs d'électromouillage ; et
ledit second emplacement étant séparé dudit premier emplacement et ne chevauchant pas ledit premier emplacement.

16. Procédé selon la revendication 14, comprenant une caractéristique sélectionnée dans le groupe constitué : par ladite séparation de ladite première partie de ladite gouttelette comprenant un premier groupe de micro-objets disposés dans ladite première partie de ladite gouttelette se déplaçant avec ladite première partie de ladite gouttelette depuis ledit premier emplacement jusqu'audit second emplacement ; et, avant ladite séparation de ladite première partie de ladite gouttelette, par la sélection dudit premier groupe de micro-objets dans un groupe plus important de micro-objets dans ladite gouttelette.
